# EUROPÄISCHE PATENTSCHRIFT

(11) **EP 3 678 909 B1**
(45) Veröffentlichungstag und Bekanntmachung des Hinweises auf die Patenterteilung: **20.10.2021**
(21) Anmeldenummer: 18765576.6
(22) Anmeldetag: 24.08.2018
(51) Int. Cl.: B60T 13/68, B60T 15/04, B60T 17/18, B60T 13/26, B60T 13/38, B60T 13/70, B60T 15/02

(54) **ELEKTROPNEUMATISCHE PARKBREMSSTEUEREINRICHTUNG UND BREMSANLAGE EINES FAHRZEUGS**
ELECTROPNEUMATIC PARKING BRAKE CONTROL DEVICE AND VEHICLE BRAKE SYSTEM
DISPOSITIF ELECTROPNEUMATIQUE DE COMMANDE DE FREIN DE STATIONNEMENT ET SYSTEME DE FREINAGE DE VEHICULE

(30) Priorität: 07.09.2017 DE 102017120691
(43) Veröffentlichungstag der Anmeldung: 15.07.2020
(73) Patentinhaber: KNORR-BREMSE Systeme für Nutzfahrzeuge GmbH, 80809 München (DE)
(72) Erfinder: SCHNITTGER, Karsten, 80935 München (DE); MICHALSKI, Max, 85579 Neubiberg (DE)
(86) Internationale Anmeldenummer: PCT/EP2018/072885
(87) Internationale Veröffentlichungsnummer: WO 2019/048263

(56) Entgegenhaltungen:
- WO-A1-2015/154787

## Beschreibung

Die Erfindung betrifft eine elektropneumatische Parkbremssteuereinrichtung zur Steuerung einer wenigstens einen Federspeicherbremszylinder beinhaltenden Feststellbremse, gemäß dem Oberbegriff von Anspruch 1.

Bei Nutzfahrzeugen einschließlich Zugfahrzeug-Anhängerkombinationen sowie Schienenfahrzeugen sind Parkbremsen (auch Feststellbremsen genannt) mit Federspeicherbremszylindern ausgestattet, die in Lösestellung einen Federkompressionsraum mit Druckluft beaufschlagen und dadurch die Feder gespannt halten, während zum Bremsen der Federkompressionsraum entlüftet, d.h. mit Atmosphärendruck verbunden wird, so dass der Bremszylinder unter Wirkung der Feder eine Bremskraft erzeugt.

Es sind sowohl rein pneumatisch betriebene Parkbremsen bekannt, die mit einem vom Fahrer zu betätigenden bistabilen Parkbremsventil betrieben werden als auch elektro-pneumatische Anlagen mit einem bistabilen elektro-mechanischem Ventil, beispielsweise einem pneumatischen Relaisventil, das durch ein elektromechanisches, bistabiles Magnetventil gesteuert wird. Beide Ventilstellungen für "Parkbremse" und "Lösen" müssen dabei "stabil" sein, d. h. ohne Einwirkung einer Person oder von elektischer Energie in der jeweils gewählten Endstellung bleiben.

Beim Stand der Technik wird die Bistabilität daher entweder rein pneumatisch mit nachgeschalteten Relaisventilen und mehreren Betätigungs- und Regelkolben beispielsweise nach DE 10 2009 016 983 A1 oder DE 10 247 812 C1, was einen hohen Aufwand und einen großen Bauraum verursacht oder über bistabile Magnetventile mit nachgeschaltetem Relaisventil sichergestellt, wie in DE10 2006 055 570 B4 beschrieben wird. Bistabile Magnetventile sind jedoch teuer und in der Praxis störanfällig.

Aus der gattungsgemäßen WO 2015/154787 A1 ist bekannt, die Bistabilität in einer elektrischen Parkbremse mit einem Relaisventil durch eine Rückkopplungsleitung des Relaisventilausgangs zum Steuerraum des Relaisventils zu realisieren, wobei in dem Rückkopplungspfad eine Drossel angeordnet ist. Dadurch erreicht man eine bistabile Verhaltensweise des Relaisventils, das auch ohne Stromversorgung der das Relaisventil steuernden Magnetventileinrichtung die aktuell eingenommene Stellung wie "Parken" oder "Fahren" stabil beibehält. Die Magnetventileinrichtung beinhaltet zwei 2/2-Wege-Magnetventile, ein Einlassmagnetventil und ein Auslassmagnetventil und wird genutzt, um eine Steuerkammer des Relaisventils zu be- oder entlüften. Dabei befindet sich der Relaisventilkolben des Relaisventils in der Entlüftungsstellung für den Zustand "Parken", wenn der Steuerdruck in der Steuerkammer unter einem bestimmten Schwellwert liegt. Dabei ist der Arbeitsanschluss des Relaisventils mit einer Entlüftung verbunden. Die Steuerkammer wird dann über die Drossel in der Rückkopplungsleitung ebenfalls über den Arbeitsanschluss des Relaisventils mit der Entlüftung verbunden. Hingehen befindet sich der Relaisventilkolben des Relaisventils in der Belüftungsstellung für den Zustand "Fahren", wenn der Steuerdruck in der Steuerkammer über einem bestimmten Schwellwert liegt. Der Arbeitsanschluss des Relaisventils ist mit der Druckversorgung verbunden. Der Steuerraum wird über die Drossel in der Rückkopplungsleitung ebenfalls mit der Druckversorgung verbunden. Für den Zustand "Abgestuftes Bremsen" werden das Einlassmagnetventil und das Auslassmagnetventil gesteuert, dass sich in der Steuerkammer Relaisventils ein Druck einstellen, der zwischen 0 bar und dem Versorgungsdruck liegt. Der Relaisventilkolben befindet sich dann in irgendeiner Zwischenstellung zwischen der Belüftungsstellung und der Entlüftungsstellung. Am Arbeitsausgang des Relaisventils wird ein dem in der Steuerkammer anstehenden Steuerdruck proportionaler Druck für die Federspeicherbremsen ausgesteuert. Mit der Parkbremse kann dann im Rahmen einer Not- oder Hilfsbremsfunktion auch während der Fahrt mit einer über das Betätigungsorgan der Parkbremse einstellbaren Bremskraft gebremst werden.

Jedoch kann ein Auftreten eines Stromausfalls während der Anwendung der Not- oder Hilfsbremsfunktion zu unterschiedlichen Bremsdrücken in den Federspeicherbremsen führen, je nachdem welcher Bremsdruck zum Zeitpunkt des Stromausfalls gerade vorlag. Dabei sind verschiedene Fälle denkbar.
a) Zum einen kann bei einem Stromausfall über die Drossel in der Rückkopplungsleitung so viel Steuerdruckluft in die Steuerkammer des Relaisventils einströmen, dass sich sowohl in der Steuerkammer als auch in den Federspeicherbremsen der Vorratsdruck einstellt. Es liegt dann der Zustand "Fahren" stabil vor und der Relaisventilkolben befindet sich in der Belüftungsstellung.
b) Weiterhin kann sich bei einem Stromausfall in der Steuerkammer des Relaisventils und in den Federspeicherbremsen der gleiche Druck einstellen, so dass dann keine Ausgleichsströmungen über die Drossel in der Rückkopplungsleitung stattfinden. Der momentane Druck in den Federspeicherbremsen wird dann beibehalten, so dass weder der Zustand "Fahren" noch der Zustand "Parken" stabil eingenommen werden. Der Relaisventilkolben befindet sich dann in einer oben beschriebenen Zwischenstellung.
c) Außerdem kann bei einem Stromausfall Druckluft von der Steuerkammer über die Drossel in der Rückkopplungsleitung in die Federspeicherbremsen strömen, so dass sowohl die Steuerkammer als auch die Federspeicherbremsen entlüftet werden. Es liegt dann der Zustand "Parken" stabil vor und der der Relaisventilkolben befindet sich in der Entlüftungsstellung.

Dabei stellt sich der obige Fall b) als problematisch dar, weil bei einem Stromausfall während der Ausführung der Not- oder Hilfsbremsfunktion der dann herrschende Druck in den Federspeicherbremsen beibehalten wird. Hingegen kann dann der Zustand "Parken" nicht mehr erreicht werden.

Der Erfindung liegt demgegenüber die Aufgabe zugrunde, eine elektropneumatische Parkbremssteuereinrichtung der eingangs erwähnten Art derart weiter zu bilden, dass mit kostengünstigen und geringen Bauraum beanspruchenden Mitteln beim Hilfsbremsen auch nach einem Stromausfall der Zustand "Parken" stabil eingenommen werden kann.

Diese Aufgabe wird erfindungsgemäß durch die Merkmale von Anspruch 1 gelöst.

### Offenbarung der Erfindung

Die Erfindung geht aus von elektropneumatische Parkbremssteuereinrichtung zur Steuerung einer wenigstens einen Federspeicherbremszylinder beinhaltenden Feststellbremse, mit einem Anschluss für den wenigstens einen Federspeicherbremszylinder, einer mittels einer elektronischen Steuereinrichtung steuerbaren Magnetventileinrichtung, einem Relaisventil, dessen pneumatischer Steuereingang einerseits mit der Magnetventileinrichtung und andererseits mit dessen Arbeitsausgang und mit dem Anschluss für den wenigstens einen Federspeicherbremszylinder verbunden ist, einem Vorratsanschluss für wenigstens einen Druckluftvorrat, welcher einerseits mit der ersten Magnetventileinrichtung und andererseits mit einem Vorratseingang des Relaisventils verbunden ist, einer Rückkopplungsleitung, durch welche der Arbeitsausgang und der pneumatische Steuereingang des Relaisventils miteinander verbunden sind, wobei das Relaisventil eine mit dem pneumatischen Steuereingang verbundene Steuerkammer, wenigstens einen vom Druck in der Steuerkammer gesteuerten, ein Doppelsitzventil betätigenden Relaiskolben sowie eine mit dem Arbeitsausgang verbundene Arbeitskammer aufweist, wobei der Relaiskolben innerhalb eines Relaisventilgehäuses geführt ist und die Steuerkammer und die Arbeitskammer begrenzt und das Doppelsitzventil wenigstens einen Einlasssitz und wenigstens einen Auslasssitz umfasst, wobei die Arbeitskammer bei geöffnetem Auslasssitz mit einer Entlüftung und bei geöffnetem Einlasssitz mit dem Vorratseingang verbunden ist, und wobei in der Rückkopplungsleitung wenigstens ein erstes Drosselelement angeordnet ist, derart, dass der Arbeitsausgang und der pneumatische Steuereingang des Relaisventils miteinander stets in gedrosselter Strömungsverbindung stehen, und wobei die Steuerkammer des Relaisventils über wenigstens ein zweites Drosselelement mit der Entlüftung verbunden ist und zwar ausschließlich dann wenn sich der Relaiskolben in einer Entlüftungsstellung oder in einer Zwischenstellung befindet, wobei aber die Verbindung der Steuerkammer mit der Entlüftung über das wenigstens eine zweite Drosselelement unterbrochen ist, wenn sich der Relaiskolben in einer Belüftungsstellung befindet, wobei die Entlüftungsstellung des Relaiskolbens innerhalb des Relaisventilgehäuses dadurch gekennzeichnet ist, dass der Auslasssitz vollständig geöffnet und der Einlasssitz des Doppelsitzventils vollständig geschlossen ist und dadurch an dem Anschluss für den wenigstens einen Federspeicherbremszylinder ein Druck ansteht, welcher einem Zuspanndruck des wenigstens einen Federspeicherbremszylinders entspricht, in welchem dieser vollständig zugespannt ist, und wobei die Belüftungsstellung des Relaiskolbens innerhalb des Relaisventilgehäuses dadurch gekennzeichnet ist, dass der Einlasssitz vollständig geöffnet und der Auslasssitz vollständig geschlossen ist und dadurch an dem Anschluss für den wenigstens einen Federspeicherbremszylinder ein Druck ansteht, welcher einem Lösedruck des wenigstens einen Federspeicherbremszylinder entspricht, in welchem dieser vollständig gelöst ist, und wobei eine Zwischenstellung des Relaiskolbens innerhalb des Relaisventilgehäuses dadurch gekennzeichnet ist, dass an dem Anschluss für den wenigstens einen Federspeicherbremszylinder ein Druck ansteht, welcher größer als der Zuspanndruck aber kleiner als der Lösedruck ist.

Es ist dabei klar, dass mehrere Zwischenstellungen des Relaiskolbens existieren, je nach angeforderter Parkbremskraft im Rahmen einer Not- oder Hilfsbremsung.

Zum Zwecke der Rückkopplung ist daher wenigstens ein erstes Drosselelement in der zwischen dem Arbeitsausgang und dem pneumatischen Steuereingang des Relaisventils gezogenen Rückkopplungsleitung angeordnet, derart, dass der Arbeitsausgang und der pneumatischen Steuereingang des Relaisventils miteinander stets in Strömungsverbindung stehen. Über die mit dem wenigstens einen ersten Drosselelement versehene Rückkopplungsleitung entsteht ein Rückkopplungskreis, in dem der Druck am Arbeitsausgang des Relaisventils bzw. am Anschluss für den wenigstens einen Federspeicherbremszylinder in den Steuereingang des Relaisventils rückgekoppelt wird.

Unter einem Drosselelement soll allgemein ein den Strömungsquerschnitt der Rückkopplungsleitung verengendes Element verstanden werden. Dabei wird der Luftmassenstrom durch das Drosselelement (in beiden Strömungsrichtungen) auf einen Wert begrenzt, welcher beispielsweise geringer als der Luftmassenstrom ist, welcher ohne das Drosselelement durch die Leitung strömen würde, in welcher das Drosselelement angeordnet ist. Der durch das Drosselelement bereit gestellte Strömungsquerschnitt ist daher kleiner als der durch die Leitung bereit gestellte Strömungsquerschnitt.

Erfindungsgemäß ist dann vorgesehen, dass die Steuerkammer des Relaisventils über wenigstens ein drittes Drosselelement mit der Entlüftung verbunden ist und zwar ausschließlich dann wenn sich der Relaiskolben in der Entlüftungsstellung befindet, wobei aber die Verbindung zwischen der Steuerkammer und der Entlüftung über das wenigstens eine dritte Drosselelement unterbrochen ist, wenn sich der Relaiskolben in der Belüftungsstellung oder in der Zwischenstellung befindet, und wobei der durch das wenigstens eine dritte Drosselelement bereitgestellte Strömungsquerschnitt größer ist als der durch das wenigstens eine erste Drosselelement bereitgestellte Strömungsquerschnitt, und der durch das wenigstens eine zweite Drosselelement bereit gestellte Strömungsquerschnitt kleiner ist als der durch das wenigstens eine erste Drosselelement bereitgestellte Strömungsquerschnitt.

Bei der gattungsgemäßen WO 2015/154787 A1 besteht der Zweck des wenigstens einen zweiten Drosselelements darin, ein ungewolltes Lösen der Parkbremse bei eventuell auftretenden Undichtigkeiten gegenüber einem Vorratsdruck führenden Bereich z.B. im Einlass-Magnetventil und damit ein ungewolltes Lösen der zugespannten Parkbremse dadurch zu vermeiden, dass gemäß der dort in Fig.9 gezeigten Ausführungsform das zweite Drosselelement am Relaiskolben so angeordnet ist, dass es die Steuerkammer des Relaisventils mit einem kleinen Querschnitt zur Entlüftung hin entlüftet, wenn sich der Relaiskolben in einer Stellung befindet, in welcher er den Einlasssitz des Doppelsitzventils noch nicht oder nicht vollständig geöffnet hat.

Aufgrund der erfindungsgemäßen Ausgestaltung wird dem wenigstens einen zweiten Drosselelement gemäß der hier vorliegenden Erfindung jedoch eine andere Funktion zugewiesen. Denn mit dem wenigstens einen zweiten Drosselelement wird nun in Bezug auf den oben beschriebenen Fall b) erreicht, dass bei einem Stromausfall während der Ausführung der Not- oder Hilfsbremsfunktion in jedem Fall der Zustand "Parken" stabil eingenommen werden kann. Mit dem wenigstens einen zweiten Drosselelement wird nun erreicht, dass bei einem Stromausfall während einer Ausführung der Not- oder Hilfsbremsfunktion der Steuerdruck in der Steuerkammer des Relaisventils sinkt, wodurch auch der Bremsdruck in den Federspeicherbremsen sinkt und demzufolge Zustand "Parken" stabil eingenommen wird.

Diese neue Funktion kann das wenigstens eine zweite Drosselelement aufgrund des Vorhandensein des wenigstens einen dritten Drosselelements gemäß dem kennzeichnenden Merkmal h) von Anspruch 1 und der in den kennzeichnenden Merkmalen i) und j) von Anspruch 1 dargestellten Verhältnisse der durch die insgesamt wenigstens drei Drosselelemente bereit gestellten Strömungsquerschnitte einnehmen, weshalb diese Merkmals synergetisch zusammen wirken.

Die in WO 2015/154787 A1 ursprünglich dem wenigstens einen zweiten Drosselelement zugewiesene Funktion, nämlich ein ungewolltes Lösen der Parkbremse bei eventuell auftretenden Undichtigkeiten gegenüber einem Vorratsdruck führenden Bereich zu vermeiden wird bei der hier vorliegenden Erfindung nun durch das wenigstens eine dritte Drosselelement realisiert.

Die hier vorliegende Erfindung hat demzufolge einen mit geringem Aufwand realisierbaren Weg gefunden, bei einem Stromausfall während der Ausführung der Not- oder Hilfsbremsfunktion und damit einhergehend unbestimmtem Zustand der Parkbremse in jedem Fall den Zustand "Parken" einzunehmen und/oder den Zustand "Parken" (dabei) stabil beizubehalten. Denn bei den Drosselelementen handelt es sich um einfach ausgestaltbare Elemente, welche insbesondere ohne elektrische Steuerung auskommen und daher ausfallsicher sind.

Für den Fachmann ist es ohne weiteres möglich, das wenigstens eine erste Drosselelement, das wenigstens eine zweite Drosselelement sowie das wenigstens eine dritte Drosselelement entsprechend der Merkmale von Anspruch 1 auszugestalten, dass sich die gewünschten Wirkungen einstellen.

Durch die in den Unteransprüchen aufgeführten Maßnahmen sind vorteilhafte Weiterbildungen und Verbesserungen der in Anspruch 1 angegebenen Erfindung möglich.

Eine besonders kostengünstige und einfache Ausführung ergibt sich, wenn das wenigstens eine zweite Drosselelement und/oder das wenigstens eine dritte Drosselelement wenigstens eine Durchgangsbohrung in einer Wandung des Relaiskolbens beinhalten oder durch ein solches gebildet werden, wobei zusätzlich ein an dem Relaisventilgehäuse festgelegtes Element vorgesehen ist, welches mit dem wenigstens einen zweiten Drosselelement und/oder mit dem wenigstens einen dritten Drosselelement derart zusammenwirkt, dass abhängig von der Stellung des Relaiskolbens innerhalb des Relaisventilgehäuses die Steuerkammer über das wenigstens eine zweite Drosselelement und/oder über das wenigstens eine dritte Drosselelement mit der Entlüftung verbunden oder eine solche Verbindung gesperrt wird.

Dabei kann insbesondere ein Strömungs- oder Drosselquerschnitt des wenigstens einen zweiten Drosselelements und/oder des wenigstens einen dritten Drosselelements durch die wenigstens eine Durchgangsbohrung in dem Relaisventilkolben gebildet werden.

Gemäß einer Fortbildung kann ein Bereich diesseits eines der Steuerkammer zugewandten Endes des an dem Relaisventilgehäuse festgelegten Elements mit der Steuerkammer in Verbindung stehen, wobei
a) wenn die wenigstens eine Durchgangsbohrung das Ende in Richtung Steuerkammer wenigstens teilweise überragt, die Steuerkammer über das wenigstens eine zweite Drosselelement und/oder über das wenigstens eine dritte Drosselelement mit der Entlüftung verbunden wird, und
b) wenn die wenigstens eine Durchgangsbohrung das Ende in Richtung Steuerkammer nicht überragt, eine solche Verbindung gesperrt wird.

Mit anderen Worten stellt dann der Relaiskolben mit der wenigstens einen Durchgangsbohrung, welche das wenigstens eine zweite Drosselelement und/oder das wenigstens eine dritte Drosselelement bildet, einen Schieber in einem Schieberventil, wobei abhängig von der Stellung des Schiebers (Relaiskolbens) in Bezug zu dem der Steuerkammer zugewandten Ende des an dem Relaisventilgehäuse festgelegten Elements eine Strömungsverbindung zwischen der Steuerkammer und der Entlüftung zustande kommt oder nicht. Dabei öffnet oder verschließt das an dem Relaisventilgehäuse festgelegte Element die wenigstens eine Durchgangsbohrung abhängig von der Stellung des Relaisventilkolbens. Auch diese Ausgestaltung trägt zu einer kostengünstigen und einfachen Realisierung der Erfindung bei.

Insbesondere können in axialer Bewegungsrichtung des Relaiskolbens gesehen das zweite Drosselelement und das dritte Drosselelement hintereinander angeordnet sein, wobei dann das zweite Drosselelement zur Steuerkammer und das dritte Drosselelement von der Steuerkammer weg weist.

Insbesondere kann das dem Relaisventilgehäuse festgelegte Element wenigstens eine am Relaiskolbengehäuse festgelegte Relaiskolbendichtung beinhalten, gegen welche eine Mantelwand des Relaiskolbens dichtet, in welcher dann die wenigstens eine Durchgangsbohrung ausgebildet ist. Damit erfüllt die Relaiskolbendichtung eine vorteilhafte Doppelfunktion, nämlich einerseits seine ursprüngliche Dichtfunktion und andererseits ein Element des Schieberventils.

Insbesondere können auch Durchgangsbohrungen, welche jeweils das wenigstens eine zweite Drosselelement und/oder das wenigstens eine dritte Drosselelement ausbilden, nebeneinander, in Nachbarschaft zueinander, oder in Bewegungsrichtung des Relaiskolbens gesehen auch seriell hintereinander und/oder nebeneinander angeordnet und insbesondere an einer äußeren Mantelwandung des Relaiskolbens ausgebildet sein. Die wenigstens eine Durchgangsbohrung kann in Bezug zu dem Relaiskolben oder zu seiner Bewegungsrichtung insbesondere radial und/oder axial verlaufen.

Gemäß einer Weiterbildung kann der Relaiskolben durch Federmittel in die Entlüftungsstellung belastet sein, in welcher der Auslasssitz des durch den Relaiskolben gesteuerten Doppelsitzventils geöffnet und ein Arbeitsanschluss des Relaisventils mit einer Entlüftung verbunden ist, was einem stabilen Einnehmen des Zustands "Parken" zuträglich ist.

Insbesondere kann die elektronische Steuereinrichtung mit einem elektrischen Feststellbremssignalanschluss für einen elektrischen Feststellbremssignalgeber verbunden sein, über welchen Feststellbremssignale in die elektronische Steuereinrichtung einsteuerbar sind.

Auch kann die elektronische Steuereinrichtung mit einem Signalanschluss zur Einsteuerung von Signalen verbunden sein, aus welchen die elektronische Steuereinrichtung Feststellbremssignale generiert. Dann sind bevorzugt auch Signale z.B. über einen Fahrzeugdatenbus in diesen Signalanschluss oder auch in den Feststellbremssignalanschluss der Parkbremssteuereinrichtung einsteuerbar, aus welchen die Steuereinrichtung dann selbst Feststellbremssignale generiert. Bei solchen Signalen kann es sich insbesondere um Signale handeln, welche einen Stillstand des Fahrzeugs im Rahmen eines Fahrerassistenzsystems wie einem Anfahrhilfesystem erkennen lassen, wobei dann beispielsweise bei Erkennen des Fahrzeugstillstands auf der Basis dieser Signale, die dann Fahrzeugstillstandssignale sind, die elektronische Steuereinrichtung ein Feststellbremssignal zum Zuspannen der Parkbremse erzeugt. Alternativ könnten in die Parkbremssteuereinrichtung eingesteuerte Signale, aus denen dann die elektronische Steuereinrichtung der Parkbremssteuereinrichtung Feststellbremssignale generiert, von beliebigen anderen Fahrerassistenzsystemen stammen wie beispielsweise von einem ACC-System (Adaptive Cruise Control) für den Fall, dass die Parkbremse während der Fahrt als Hilfsbremse verwendet wird. In allen diesen Fällen werden die Feststellbremssignale daher nicht abhängig von einer Betätigung des Feststellbremssignalgebers sondern von einem oder mehreren Fahrerassistenzsystemen automatisch erzeugt.

Selbstverständlich können die in die Parkbremssteuereinrichtung eingesteuerten Signale, aus denen dann die elektronische Steuereinrichtung der Parkbremssteuereinrichtung Feststellbremssignale generiert, von einem durch den Fahrer manuell betätigbaren Betätigungseinrichtung stammen, mit welcher abhängig von einem Betätigungsgrad eines Betätigungselements wenigstens die Zustände "Parken" und "Fahren" hergestellt und insbesondere auch die Höhe der ausgeübten Parkbremskraft im Rahmen der Not- oder Hilfsbremsfunktion.

Hierzu ist dann dieser Signalanschluss oder der Feststellbremssignalanschluss beispielsweise ausgebildet, dass er an einen Fahrzeugdatenbus anschließbar ist, um über den Fahrzeugdatenbus geleitete Signale in die elektronische Steuereinrichtung einzusteuern, welche dann dort abhängig von diesen Signalen Feststellbremssignale generiert. Die Kommunikation zwischen der elektronischen Steuereinrichtung und dem Fahrzeugdatenbus ist dann bevorzugt bidirektional.

Besonders bevorzugt kann die Magnetventileinrichtung durch zwei 2/2-Wegemagnetventile mit jeweils einer Sperrstellung und einer Durchlassstellung gebildet werden, wobei ein erstes 2/2-Wegemagnetventil als Einlassventil zwischen den Steuereingang des Relaisventils und den Vorratsanschluss und ein zweites 2/2-Wegemagnetventil zwischen den Steuereingang des Relaisventils und eine Drucksenke geschaltet ist.

Dabei können das erste 2/2-Wegemagnetventil und das zweite 2/2-Wegemagnetventil jeweils eine stromlose, federbelastete Sperrstellung und eine bestromte Durchlassstellung besitzen. Dann ist bei einem Ausfall der elektrischen Energieversorgung der Steuereingang des Relaisventils sowohl vom Vorratsanschluss wie auch von der Entlüftung oder Drucksenke abgekoppelt, so dass keine Steuerdruckluft vom Vorratsanschluss zum Relaisventil gelangen oder von diesem über die Drucksenke entweichen kann.

Alternativ kann die Magnetventileinrichtung auch wenigstens ein 3/2-Magnetventil beinhalten.

Insgesamt ergeben sich dadurch Vorteile im Hinblick auf einen einfachen und kostengünstigen Aufbau, einen geringen Bauraumbedarf sowie eine robuste, bewährte Technik, da die Erfindung eine Verwendung von Baukastenkomponenten wie 2/2-Magnetventile und/oder 3/2-Magnetventile sowie Relaisventile bevorzugt.

Gemäß einer Weiterbildung nach ist vorgesehen, dass bei einem Einsteuern oder einem Generieren eines einen Zustand "Fahren" repräsentierenden Feststellbremssignals in die elektronische Steuereinrichtung oder in der elektronischen Steuereinrichtung das zweite 2/2-Wegemagnetventil in Sperrstellung und das erste 2/2-Wegemagnetventil zunächst in Durchlassstellung steuert. Beispielsweise durch Bestromen wird daher über einen bestimmten Zeitraum das erste 2/2-Wegemagnetventil zunächst in Durchlassstellung geschaltet, während das zweite 2/2-Wegemagnetventil in Sperrstellung verbleibt. Nach Ablauf der bestimmten Zeitdauer, welche notwendig ist, damit der Druck am Anschluss für den wenigstens einen Federspeicherbremszylinder den vollen Lösedruck des Federspeicherbremszylinders erreicht hat, wird dann das erste 2/2-Wegemagnetventil in Sperrstellung gesteuert. Somit ist der Steuereingang nur noch gedrosselt mit dem Arbeitsausgang verbunden. Eine sich eventuell, z.B. durch einen Defekt, ergebende, leichte Undichtigkeit zu einer Drucksenke hin, würde über den Einlasssitz des Relaisventils kompensiert.

Bei einem Einsteuern oder einem Generieren eines einen Zustand "Parkbremse mit einem bestimmtem Bremsdruckwert betätigen" repräsentierenden Feststellbremssignals in die elektronische Steuereinrichtung oder in der elektronischen Steuereinrichtung steuert diese bevorzugt das erste 2/2-Wegemagnetventil und/oder das zweite 2/2-Wegemagnetventil abhängig von den dem jeweiligen Bremsdruckwert in Sperrstellung oder in Durchlassstellung. Dies ist insbesondere im Rahmen einer Hilfs- oder Notbremsung der Fall, in welchem die Feststellbremse die Betriebsbremse ersetzen oder sie unterstützen muss.

Für eine Drucksteigerung an dem Anschluss für den wenigstens einen Federspeicherbremszylinder wird beispielsweise das erste 2/2-Wegemagnetventil in Durchlassstellung gesteuert, so dass der Druck am Steuereingang des Relaisventils und damit auch am Anschluss für den wenigstens einen Federspeicherbremszylinder erhöht wird.

Für eine Drucksenkung an dem Anschluss für den wenigstens einen Federspeicherbremszylinder wird beispielsweise das zweite 2/2-Wegemagnetventil in Durchlassstellung geschaltet, so dass der Druck am Steuereingang des Relaisventils und damit auch am Anschluss für den wenigstens einen Federspeicherbremszylinder verringert wird.

Im ersten Fall kann die elektronische Steuereinrichtung das erste 2/2-Wegemagnetventil und im zweiten Fall das zweite 2/2-Wegemagnetventil wechselweise oder gepulst in Sperrstellung und über einen demgegenüber längeren Zeitraum in Durchlassstellung steuern, um einen rampenförmigen oder allmählichen Druckanstieg oder Druckabfall zu erzielen, der gerade für ein feinfühliges Dosieren bzw. für eine Regelung der Feststellbremskraft bzw. des Feststellbremsdrucks insbesondere im Rahmen einer Hilfs- oder Notbremsung vorteilhaft ist.

Die Luftströmung durch das wenigstens eine erste Drosselelement, die sich je nach aktueller Druckdifferenz zwischen Arbeitsausgang und Steuereingang des Relaisventils eventuell ergibt, sowie eine sich eventuell, z.B. durch einen Defekt ergebende, leichte Undichtigkeit zu einer Drucksenke oder zum Vorratsdruck hin, kann durch kurzzeitige Bestromung des gegensinnig wirkenden 2/2 Magnetventils kompensiert werden.

Gemäß einer Weiterbildung kann bei einem Einsteuern oder Generieren eines einen Zustand "Parken" repräsentierenden Feststellbremssignals in die die elektronische Steuereinrichtung oder in der elektronischen Steuereinrichtung diese das erste 2/2-Wegemagnetventil in Sperrstellung und das zweite 2/2-Wegemagnetventil zunächst in Durchlassstellung und dann in Sperrstellung steuern. Beispielsweise durch Bestromen wird daher über einen bestimmten Zeitraum zunächst das zweite 2/2-Wegemagnetventil in Durchlassstellung geschaltet, während das erste 2/2-Wegemagnetventil in Sperrstellung verbleibt. Nach Ablauf der bestimmten Zeitdauer, welche notwendig ist, damit der Druck am Anschluss für den wenigstens einen Federspeicherbremszylinder zumindest soweit abgesunken ist, dass das Relaisventil auch nach Abschalten des zweiten 2/2-Wegemagnetventils der Entlüftungsstellung verbleibt, wird dann das zweite 2/2-Wegemagnetventil in Sperrstellung gesteuert. Somit ist der Steuereingang nur noch gedrosselt mit dem Arbeitsausgang verbunden. Eine sich eventuell, z.B. durch einen Defekt, ergebende, leichte Undichtigkeit zum Vorratsdruck hin, würde über den Auslasssitz des Relaisventils entlüftet.

Besonders bevorzugt ist die elektromagnetische Parkbremssteuereinrichtung auch für eine Zugfahrzeug-Anhängerkombination vorgesehen und weist dann zumindest einen Anschluss für ein Anhängersteuerventil auf, welcher mit dem Anschluss für den wenigstens einen Federspeicherbremszylinder verbindbar ist.

Weiterhin kann wenigstens ein Drucksensor mit dem Anschluss für den wenigstens einen Federspeicherbremszylinder und/oder wenigstens ein Drucksensor mit dem Steuereingang des Relaisventils und/oder wenigstens ein Drucksensor mit dem Anschluss für das Anhängersteuerventil verbunden sein, der ein einen Ist-Druck repräsentierendes Signal in die elektronische Steuereinrichtung einsteuert.

Dann kann die elektronische Steuereinrichtung ausgebildet sein, dass sie auf der Basis eines einen Ist-Druck repräsentierenden Signals und eines einen Wert für einen Soll-Druck repräsentierenden Signals einen Soll-Ist-Abgleich im Rahmen einer Druckregelung durchführt und/oder eine Druck-Plausibilitätsprüfung und/oder eine Ermittlung des am Vorratsanschluss anstehenden Vorratsdrucks durchführt.

Falls beispielsweise ein Drucksensor am Arbeitsausgang des Relaisventils angeschlossen und damit auch mit dem Anschluss für den wenigstens einen Federspeicherbremszylinder bzw. mit dem Anschluss für das Anhängersteuerventil verbindbar bzw. verbunden ist, so kann dort der Ist-Druck und daraus der Betriebszustand des wenigstens einen Federspeicherbremszylinders (gelöst, zugespannt bzw. teilweise gelöst oder zugespannt) ermittelt werden. Das Gleiche gilt dann auch für den Betriebszustand der Anhängerbremsen, welcher aus dem Ist-Druck am Anschluss für das Anhängersteuerventil ermittelbar ist. Weiterhin wird ein Druckregelkreis realisiert, bei welchem die erste Magnetventileinrichtung in Verbindung mit dem Relaisventil die Stellglieder bilden.

Falls gemäß ein Drucksensor mit dem Steuereingang des Relaisventils verbunden wird, so kann sehr schnell der von der Magnetventileinrichtung, insbesondere der von dem ersten und zweiten 2/2-Wegemagnetventil eingeregelte Ist-Druck ermittelt werden, was eine hohe Dynamik des Druckregelkreises ermöglicht. Darüber hinaus können auch der Betriebszustand des wenigstens einen Federspeicherbremszylinders (gelöst, zugespannt bzw. teilweise gelöst oder zugespannt) sowie der dort herrschende Ist-Bremsdruck unter Berücksichtigung des Übertragungsverhaltens des Relaisventils näherungsweise ermittelt werden. Das Gleiche gilt dann auch für den Betriebszustand der Anhängerbremsen.

Falls gemäß ein erster Drucksensor mit dem Steuereingang und ein zweiter Drucksensor mit dem Arbeitsausgang des Relaisventils verbunden werden, ermöglicht dies eine Fehlererkennung mittels Plausibilitätsprüfung. Beispielsweise müssen die Ist-Druckwerte des ersten und zweiten Drucksensors je nach Betriebszustand unter Berücksichtigung von bestimmten Toleranzen in einer bestimmten Relation zueinander stehen. Dabei ist die Fehlererkennung oder Fehlerüberwachung schnell, vollständig und in mehreren Betriebszuständen durchführbar. Weiterhin ist eine schnellere Druckregelung möglich, als wenn nur ein Drucksensor am Arbeitsausgang des Relaisventils oder ein Drucksensor am Steuereingang des Relaisventils angeordnet ist.

Falls zusammen mit einem Drucksensor am Arbeitsausgang und/oder am Steuereingang des Relaisventils ein weiterer Drucksensor mit dem Anschluss des Anhängersteuerventils verbunden wird, so ist in mehreren Betriebszuständen eine direkte Messung des Vorratsdrucks am Vorratanschluss möglich, ohne dass der Betriebszustand "Fahren" eingestellt werden muss. Weiterhin ist auch eine schnelle Fehlererkennung mittels Plausibilitätsprüfung möglich. Beispielsweise müssen die Ist-Drücke der Drucksensoren gleiche Werte anzeigen, wenn die Magnetventile so geschaltet werden, dass eine Druckverbindung zwischen den Drucksensoren zustande kommt. Wie zuvor ist auch in mehreren Betriebszuständen eine Ermittlung des Vorratsdrucks möglich. Vorteilhafter Weise wird dadurch auch eine Druckregelung des Drucks am Anschluss für das Anhängersteuerventil möglich, wenn der Zustand "Streckbremse" vorgesehen ist, in dem zum Strecken der Zugfahrzeug-Anhängerkombination lediglich die Anhängerbremsen, nicht aber die Zugfahrzeugbremsen dosiert zugespannt werden.

Gemäß einer Weiterbildung können wenigstens das Relaisventil, die Magnetventileinrichtung, die elektronische Steuereinrichtung, das wenigstens eine erste Drosselelement, das wenigstens eine zweite Drosselelement, das wenigstens eine dritte Drosselelement sowie der Vorratsanschluss, der Anschluss für den wenigstens einen Federspeicherbremszylinder und der Feststellbremssignalanschluss in einer Baueinheit ausgebildet sein. Dies resultiert in einer kompakten Baueinheit, welche als Grundmodul noch weiter ausbaufähig ist.

Die Erfindung betrifft auch eine Bremsanlage eines Fahrzeugs, insbesondere eine elektropneumatische Parkbremseinrichtung und insbesondere eine elektronisch geregelte Parkbremseinrichtung (EPB) beinhaltend eine oben beschriebene elektropneumatische Parkbremssteuereinrichtung,

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der Zeichnung zeigt
- Fig.1: ein schematisches Schaltbild einer bevorzugten Ausführungsform einer elektropneumatischen Parkbremssteuereinrichtung gemäß der Erfindung;
- Fig.2: eine schematisierte Querschnittsdarstellung eines Relaisventils der einer elektropneumatischen Parkbremssteuereinrichtung von Fig.1 in der Stellung "Parken" oder "Feststellbremsen";
- Fig.3: eine schematisierte Querschnittsdarstellung des Relaisventils der einer elektropneumatischen Parkbremssteuereinrichtung von Fig.1 in einer Stellung "Parkbremse mit einem bestimmtem Bremsdruckwert betätigen" im Rahmen einer Not- oder Hilfsbremsfunktion;
- Fig.4: eine schematisierte Querschnittsdarstellung des Relaisventils der elektropneumatischen Parkbremssteuereinrichtung von Fig.1 in der Stellung "Fahren".

### Beschreibung des Ausführungsbeispiels

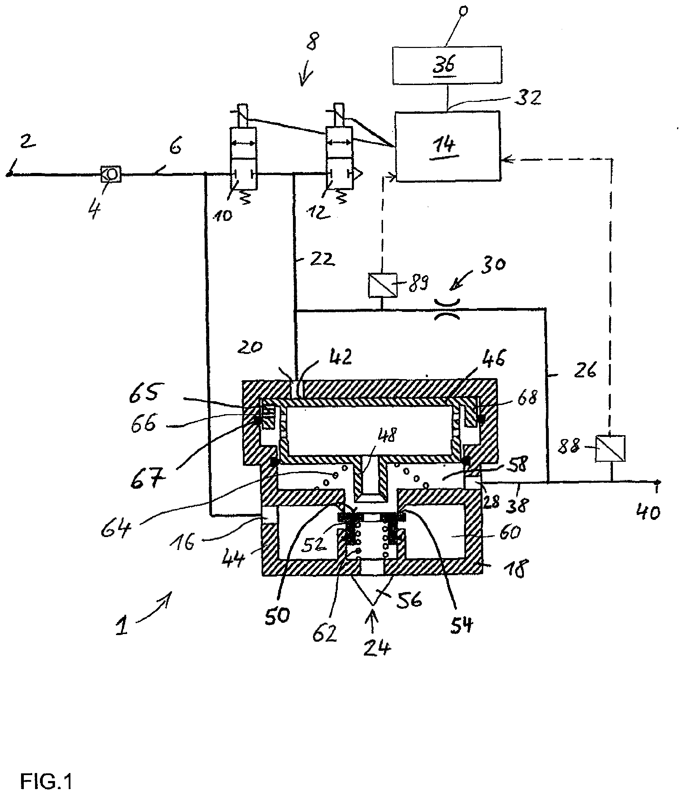

**Fig.1** zeigt ein schematisches Schaltbild einer bevorzugten Ausführungsform einer elektropneumatischen Parkbremssteuereinrichtung 1 gemäß der Erfindung. Die elektropneumatische Parkbremssteuereinrichtung 1 stellt bevorzugt eine Steuereinrichtung einer elektropneumatischen Parkbremseinrichtung einer Zugfahrzeug-Anhängerkombination dar und ist auf dem Zugfahrzeug angeordnet.

Die elektropneumatische Parkbremssteuereinrichtung 1 hat einen Vorratsanschluss 2, der über ein Rückschlagventil 4 abgesichert ist. Von dem Vorratsanschluss 2 erstreckt sich eine Vorratsleitung 6 einerseits zu einer ersten Magnetventileinrichtung 8 mit einem ersten 2/2-Wegemagnetventil 10 als Einlassventil und einem zweiten 2/2-Wegemagnetventil 12 als Auslassventil. Das erste 2/2-Wegemagnetventil 10 befindet sich wie das zweite 2/2-Wegemagnetventil 12 unbestromt in der gezeigten Sperrstellung, während beide Ventile 10, 12 bestromt in die Durchlassstellung umschalten und von einer elektronischen Steuereinrichtung 14 gesteuert werden.

Weiterhin ist auch ein Vorratseingang 16 eines Relaisventils über die Vorratsleitung 6 an den Vorratsanschluss 2 angeschlossen. Ein pneumatischer Steuereingang 20 des Relaisventils 18 ist über eine Steuerleitung 22 mit der Kombination aus Einlassventil 10 (erstes 2/2-Wegemagnetventil) und Auslassventil 12 (zweites 2/2-Wegemagnetventil) verbunden.

Im Einzelnen ist in der stromlosen Sperrstellung des zweiten 2/2-Wegemagnetventils 12 die Verbindung zwischen der Steuerleitung 22 bzw. dem Steuereingang 20 des Relaisventils 18 und einer Drucksenke 24 unterbrochen, während diese Verbindung in der bestromten Durchlassstellung geschaltet ist. In analoger Weise ist in der stromlosen Sperrstellung des ersten 2/2-Wegemagnetventils 10 die Verbindung zwischen der Steuerleitung 22 bzw. dem Steuereingang 20 des Relaisventils 18 und dem Vorratsanschluss 2 unterbrochen, während diese Verbindung in der bestromten Durchlassstellung geschaltet ist.

Darüber hinaus ist in eine Rückkopplungsleitung 26 zwischen einem Arbeitsausgang 28 des Relaisventils 18 und dem Steuereingang 20 des Relaisventils 18 ein erstes Drosselelement 30 geschaltet, durch welches der Strömungsquerschnitt der Rückkopplungsleitung 26 verengt und mittels der Strömungsquerschnittsverengung der Luftmassenstrom zwischen dem Arbeitsausgang und dem pneumatischen Steuereingang des Relaisventils begrenzt bzw. gedrosselt wird.

Die beiden 2/2-Wegemagnetventile 10, 12 sind bevorzugt in ihre stromlose Stellung federbelastet vorgespannt und werden durch Bestromung mittels der Steuereinrichtung 14 umgeschaltet.

Der Arbeitsausgang 28 des Relaisventils 18 ist mittels einer Arbeitsleitung 38 mit einem Anschluss 40 für wenigstens einen Federspeicherbremszylinder verbunden. An diesen Anschluss 40 sind bevorzugt zwei hier nicht gezeigte Federspeicherbremszylinder an der Hinterachse angeschlossen.

Die Steuerleitung 22 bzw. der Steuereingang 20 des Relaisventils 18 wird je nach Schaltstellung des ersten 2/2-Wegemagnetventils 10 und des zweiten 2/2-Wegemagnetventil 12 (Einlass-/Auslassmagnetventilkombination) be- oder entlüftet, so dass eine Be- oder Entlüftung durch Luftmengenverstärkung mittels des Relaisventils 18 eine entsprechende Be- oder Entlüftung des Arbeitsausgangs 28 und damit des Anschlusses 40 für den wenigstens einen Federspeicherbremszylinder nach sich zieht.

Das Relaisventil 18 ist zunächst in weitgehend bekannter Weise aufgebaut und beinhaltet eine über den Steuereingang 20 an die Steuerleitung angeschlossene Steuerkammer 42, einen die Steuerkammer 42 begrenzenden, in einem Gehäuse 44 beweglichen Relaiskolben 46 mit einem an dem Relaiskolben 46 bzw. an dessen Relaisventilkolbenstange ausgebildeten Ventilkörper 48, der mit einem Auslasssitz 50 an einer ebenfalls im Gehäuse 44 beweglich aufgenommenen Manschette 52 ein Auslassventil eines Doppelsitzventils ausbildet. Weiterhin beinhaltet das Relaisventil 18 einen am Gehäuse 44 ausgebildeten Einlasssitz 54, gegen welchen die Manschette 52 vorgespannt und mit diesem zusammen ein Einlassventil des Doppelsitzventils bildet. Die Manschette 52 weist außerdem eine mittige Durchgangsbohrung auf, die bei von der Manschette 52 abgehobenem Relaiskolben 46 eine Entlüftung 56 mit einer Arbeitskammer 58 verbindet, die mit dem Arbeitsausgang 28 verbunden ist, um diesen zu entlüften. Andererseits ist eine mit dem Vorratseingang 16 in Verbindung stehende Vorratskammer 60 bei von dem Einlasssitz 54 abgehobener Manschette 52 mit der Arbeitskammer 58 verbunden, um den Arbeitsausgang 28 zu belüften. Die Stellung des Relaiskolbens 46, der mit seinem Ventilkörper 48 die Manschette 52 nach unten drücken kann, um ihn vom Einlasssitz 54 abzuheben wird demnach durch den Druck am Steuereingang 20 bzw. in der Steuerkammer 42 bestimmt. Schließlich wird die Manschette 52 mittels einer Manschettenfeder 62 gegen den Einlasssitz 54 gedrängt. Außerdem drängt eine Relaiskolbenfeder 64 mit der Kraft F_{F} den Relaiskolben 46 vom Auslasssitz 50 weg in Richtung Steuerkammer 42.

Die Schaltzustände der beiden 2/2-Wegemagnetventile 10, 12 werden durch die Steuereinrichtung 14 bestimmt, insbesondere in Abhängigkeit von den an dem Feststellbremssignalanschluss 32 anstehenden Feststellbremssignalen. Hierzu ist der Feststellbremssignalgeber 36 ausgebildet, dass er betätigungsabhängig Feststellbremssignale aussteuert, welche die weiter unter beschriebenen Betriebszustände repräsentieren.

Die Steuereinrichtung kann über den Feststellbremssignalanschluss oder über einen weiteren Signalanschluss auch mit einem in den Figuren nicht dargestellten Fahrzeugdatenbus verbunden sein, über den digitale Daten von anderen Steuereinrichtungen empfangen und an diese gesendet werden können. Anstatt durch den oder zusätzlich zu dem durch den Fahrer manuell bedienbaren Feststellbremssignalgeber 36 können Feststellbremssignale auch von einer weiteren Steuereinrichtung beispielsweise über einen Fahrzeugdatenbus in die Steuereinrichtung 14 eingesteuert werden, beispielsweise von einem Fahrerassistenzsystem wie beispielsweise von einem Anfahrhilfesystem an Steigungen. Anhand von über einen solchen Fahrzeugdatenbus empfangenen Signalen können Feststellbremssignale dann von der Steuereinrichtung 14 selbst generiert werden. Beispielsweise kann die Parkbremse automatisch zugespannt werden, wenn das Fahrzeug zum Stillstand gekommen ist, oder auch automatisch gelöst werden, wenn erkannt wird, dass das Fahrzeug losfahren soll.

Vor diesem Hintergrund ist die Funktionsweise der elektromagnetischen Parkbremssteuereinrichtung 1 wie folgt:
In dem in **Fig.1** gezeigten Grundzustand der elektropneumatischen Parkbremssteuereinrichtung 1 sind sowohl das erste 2/2-Wegemagnetventil 10 als auch das zweite 2/2-Wegemagnetventil 12 unbestromt, so dass über das erste Drosselelement 30 der Steuereingang 20 stets mit dem Arbeitsausgang 28 des Relaisventils 18 verbunden ist. Damit ist die Rückkopplung stabil und es kann keine Druckluft vom Vorratsanschluss 2 zum Steuereingang 20 des Relaisventils 18 gelangen bzw. von diesem zur Drucksenke 24 entweichen. Damit wird auch der gerade herrschende Druck an dem Anschluss 40 für den wenigstens einen Federspeicherbremszylinder und dadurch auch dessen Zuspann- bzw. Lösestellung konstant gehalten.

Soll nun auf ein entsprechendes Feststellbremssignal hin der Druck an dem Anschluss 40 für den wenigstens einen Federspeicherbremszylinder erhöht werden, beispielsweise im Betriebszustand "Parkbremse mit einem bestimmtem Bremsdruckwert betätigen" im Rahmen einer Not- oder Hilfsbremsfunktion, so wird durch Bestromen des ersten 2/2-Wegemagnetventils 10 dieses in Durchgangsstellung geschaltet und dadurch der Druck in der Steuerkammer 42 des Relaisventils 18 erhöht. Dies erfolgt insbesondere durch Pulsen des ersten 2/2-Wegemagnetventils 10.

Dann bewegt sich der Relaiskolben 46 nach unten, öffnet den Einlasssitz 54 des Doppelsitzventils und lässt Vorratsdruck in die Arbeitskammer 58 einströmen. Danach bewegt sich der Relaiskolben 46 zurück bis in eine Neutralstellung, in welcher Einlasssitz 54 und Auslasssitz 50 des Doppelsitzventils geschlossen sind.

Soll aber im Betriebszustand "Parkbremse mit einem bestimmtem Bremsdruckwert betätigen" im Rahmen der Not- oder Hilfsbremsfunktion auf ein entsprechendes Feststellbremssignal hin beispielsweise ein geringerer Druck an dem Anschluss 40 für den wenigstens einen Federspeicherbremszylinder eingeregelt werden, so wird vorzugsweise durch Pulsen des zweiten 2/2-Wegemagnetventils 12 der Steuerdruck in der Steuerkammer 42 abgesenkt.

Dann bewegt sich der Relaiskolben 46 in Richtung Steuerkammer 42 und entlüftet die Arbeitskammer 58 über den Auslasssitz 50 des Doppelsitzventils, bis wieder Kräftegleichgewicht herrscht, woraufhin der Relaiskolben 46 wieder in Neutralstellung übergeht.

Da während der oben beschriebenen Drucksteuerung bzw. Druckregelung in der Steuerkammer 42 und in der Arbeitskammer 58 im Allgemeinen nicht die gleichen Drücke herrschen und über das erste Drosselelement 30 immer ein gewisse Luftmenge in Richtung des niedrigeren Drucks strömt, wird vorzugsweise daraus resultierende Anteil der Druckänderung in der Steuerkammer 42 durch entsprechende gepulste Steuerung des ersten 2/2-Wegemagnetventils 10 bzw. des zweiten 2/2-Wegemagnetventils 12 ausgeglichen. Dies gilt sowohl für Drucksteigern, Druckverringern als auch für Druckhalten, wenn nicht genau Vorratsdruck oder Atmosphärendruck am Anschluss 40 für den wenigstens einen Federspeicherbremszylinder herrschen sollen.

Zum Herstellen des Betriebszustands "Fahren" auf ein entsprechendes Feststellbremssignal hin wird das erste 2/2-Wegemagnetventil 10 beispielsweise über längere Zeit bestromt. Dadurch wird die Steuerkammer 42 belüftet, auch wenn zunächst ein geringer Teil der vom ersten 2/2-Wegemagnetventil 10 zur Steuerkammer geleiteten Luft durch das Drosselelement (30) in die Arbeitskammer abströmt. Dann steigt der Druck in der Arbeitskammer 58 schneller als in der Steuerkammer 42 bis er ihn schließlich überschreitet. Dann strömt über die Rückkopplungsleitung 26 und das erste Drosselelement 30 Luft von der Arbeitskammer 58 in die Steuerkammer 42 über, so dass sich der Prozess selbst verstärkt.

Dadurch wird der Relaiskolben 46 stabil in seine untere, zur Arbeitskammer 58 weisende Endposition gedrängt, sodass er permanent den Einlasssitz 54 des Doppelsitzventils öffnet und die Arbeitskammer 58 mit dem Vorratsanschluss 2 verbindet.

Da nun die Steuerkammer 42 über das erste Drosselelement 30, die Arbeitskammer 58 und den Einlasssitz 54 permanent mit Vorratsdruck versorgt wird, kann auch das erste 2/2-Wegemagnetventil 10 entstromt werden, um es in seine Sperrstellung zu schalten.

Zum Herstellen des Betriebszustands "Parken" wird das zweite 2/2-Wegemagnetventil 12 über eine gewisse Zeitdauer bestromt. Dadurch wird die Steuerkammer 42 entlüftet, bis dort Atmosphärendruck herrscht. Dann bewegt sich der Relaiskolben 46 in Richtung Steuerkammer 42 und entlüftet die Arbeitskammer 58 über den Auslasssitz 50 des Doppelsitzventils.

Die den Relaiskolben 46 belastende Relaiskolbenfeder 64 sorgt dafür, dass er sich bis in seine obere Endstellung bewegt und dort verharrt, wodurch der Auslasssitz 50 permanent vollständig geöffnet ist. Da nun die Steuerkammer 42 über das Drosselelement 30, die Arbeitskammer 58 und den geöffneten Auslasssitz 50 permanent mit Atmosphäre verbunden ist, kann das zweite 2/2-Wegemagnetventil 12 entstromt und damit in seine Sperrstellung gebracht werden.

Um bei einem Stromausfall während der Ausführung einer Not- oder Hilfsbremsfunktion in jedem Fall den Zustand "Parken" stabil einzunehmen, ist ein zweites Drosselelement 65 vorgesehen. Damit wird erreicht, dass bei einem Stromausfall während der Ausführung der Not- oder Hilfsbremsfunktion der Steuerdruck in der Steuerkammer 42 des Relaisventils 18 sinkt, wodurch auch der Bremsdruck in den Federspeicherbremsen sinkt und demzufolge Zustand "Parken" stabil eingenommen werden kann.

Das zweite Drosselelement 65 wird bevorzugt durch eine radiale Durchgangsbohrung in einer äußeren Mantelwand 68 des Relaiskolbens 46 gebildet. Dabei stellt der Durchmesser der Durchgangsbohrung den Strömungs- oder Drosselquerschnitt des zweiten Drosselelements 65 dar. Anstatt einer einzigen Durchgangsbohrung 65 können auch mehrere Durchgangsbohrungen beispielsweise über den Umfang verteilt in der Mantelwand 68 vorgesehen sein.

Um ein ungewolltes Lösen der zugespannten Parkbremse bei eventuell auftretenden Undichtigkeiten gegenüber einem Vorratsdruck führenden Bereich zu vermeiden, ist nun ein drittes Drosselelement 66 vorgesehen. Das dritte Drosselelement 66 wird bevorzugt durch mehrere am Umfang der Mantelwand 68 des Relaiskolbens 46 verteilt angeordnete radiale Durchgangsbohrungen in der äußeren Mantelwand 68 gebildet. Dabei stellt die Summe der Durchmesser der Durchgangsbohrungen den Strömungs- oder Drosselquerschnitt des dritten Drosselelements 66 dar. Anstatt mehrerer kleiner Durchgangsbohrungen 66 kann auch nur eine einzige größere Durchgangsbohrung in der Mantelwand 68 vorgesehen sein.

Dabei ist in axialer Bewegungsrichtung 70 des Relaiskolbens 46 gesehen das zweite Drosselelement 65 und das dritte Drosselelement 66 hintereinander angeordnet.

Weiterhin ist ein an dem Relaisventilgehäuse 44 festgelegtes Element 67 vorgesehen, welches mit dem zweiten Drosselelement 65 und mit dem dritten Drosselelement 66 derart zusammenwirkt, dass abhängig von der Stellung des Relaiskolbens 46 innerhalb des Relaisventilgehäuses 44 die Steuerkammer 42 über das zweite Drosselelement 65 und über das dritte Drosselelement 66 mit der Entlüftung 56 verbunden oder eine solche Verbindung gesperrt wird.

Insbesondere wird das an dem Relaisventilgehäuse 44 festgelegte Element hier beispielsweise durch eine Relaiskolbendichtung 67 gebildet, gegen welche die Mantelwand 68 des Relaiskolbens 46 dichtet.

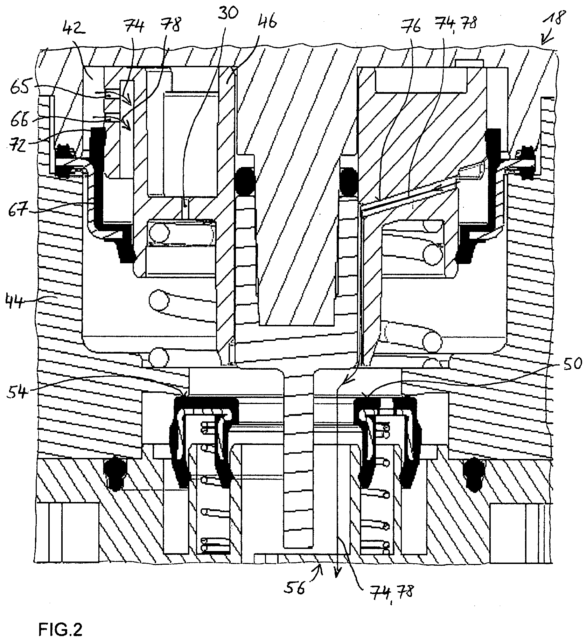

Wie insbesondere aus den **Fig.2** bis **Fig.4** hervorgeht, steht ein Bereich des Relaisventils 18, welcher sich diesseits eines der Steuerkammer 42 zugewandten Endes 72 der Relaiskolbendichtung 67 befindet, mit der Steuerkammer 42 in Verbindung.

Wenn dann die zweite Drosselelement bildende Durchgangsbohrung 65 in axialer Bewegungsrichtung 70 des Relaiskolbens 46 gesehen das der Steuerkammer 42 zugewandte Ende 72 der Relaiskolbendichtung 67 in Richtung Steuerkammer 42 wenigstens teilweise überragt, so ist oder wird die Steuerkammer 42 über das zweite Drosselelement 65 mit der Entlüftung 56 verbunden, wie in **Fig. 2** gezeigt ist, welche die Entlüftungsstellung des Relaiskolbens 46 im Zustand "Parken" zeigt. In der Entlüftungsstellung des Relaiskolbens 46 ist der Auslasssitz 50 vollständig geöffnet und der Einlasssitz 54 vollständig geschlossen.

Dann besteht eine durch den Pfeil 74 in **Fig.2** angedeutete Strömungsverbindung zwischen der Steuerkammer 42 und der Entlüftung 56 über die Durchgangsbohrung 65, eine hier beispielsweise schräge Querbohrung 76 im Relaiskolben 46 sowie über den dann geöffneten Auslasssitz 50 des Doppelsitzventils.

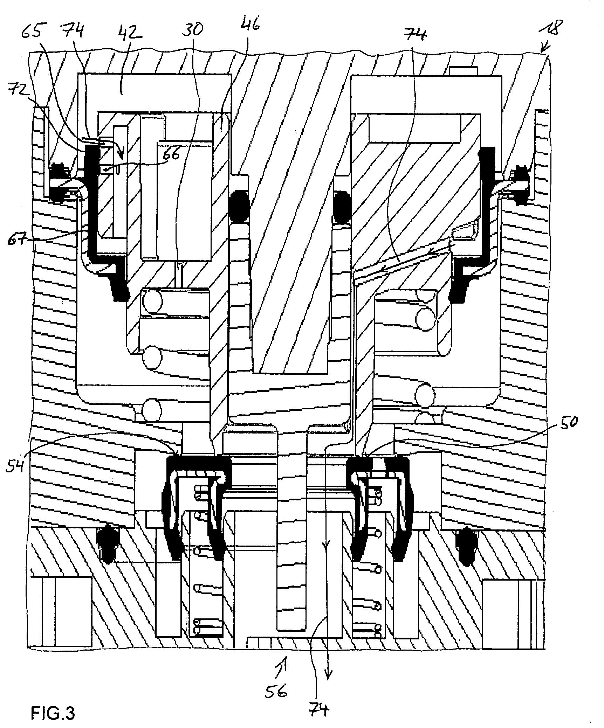

Dasselbe gilt auch für den in **Fig.3** gezeigte Zwischenstellung des Relaiskolbens 46, welche dem Zustand "Parkbremse mit einem bestimmtem Bremsdruckwert betätigen" im Rahmen der Not- oder Hilfsbremsfunktion entspricht. Dann wird entweder zum Erhöhen der Feststellbremskraft der Auslasssitz 50 teilweise geöffnet und der Einlasssitz 54 vollständig geschlossen oder zum Reduzieren der Feststellbremskraft der Auslasssitz 50 vollständig geschlossen und der Einlasssitz 54 teilweise geöffnet. Nach einer gewissen Zeit sind aufgrund des sich dann einstellenden Kräftegleichgewichts am Relaiskolben 46 sowohl der Auslasssitz 50 wie auch der Einlasssitz 54 geschlossen.

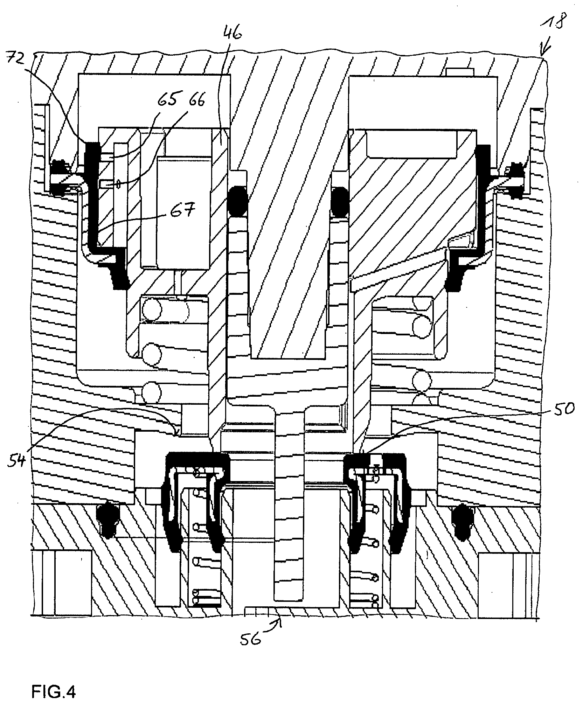

Wenn dagegen in der in **Fig.4** gezeigten Belüftungsstellung des Relaiskolbens 46 der Zustand "Fahren" eingenommen wird und sich der Relaiskolben zum (vollständigen) Öffnen des Einlasssitzes 54 und zum (vollständigen) Schließen des Auslasssitzes 50 nach unten bewegt, so wird die das zweite Drosselelement bildende Durchgangsbohrung 65 durch das Ende 72 der Relaiskolbendichtung 67 verdeckt bzw. verschlossen, so dass die Strömungsverbindung zwischen der Steuerkammer 42 und der Entlüftung 56 über das zweite Drosselelement gesperrt wird.

Folglich ist eine Strömungsverbindung zwischen der Steuerkammer 42 und der Entlüftung 56 durch das zweite Drosselelement lediglich im Zustand "Parken" und im Zustand "Parkbremse mit einem bestimmtem Bremsdruckwert betätigen" möglich, im Zustand "Fahren" jedoch nicht.

Die **Fig.3** gezeigte Zwischenstellung des Relaiskolbens 46 befindet sich in axialer Bewegungsrichtung des Relaiskolbens 46 gesehen zwischen der Entlüftungsstellung von **Fig.2** ("Parken") und der Belüftungsstellung von Fig.4 ("Fahren").

Weiterhin ist der durch das zweite Drosselelement 65 bereit gestellte Strömungsquerschnitt kleiner ist als der das erste Drosselelement 30 bereitgestellte Strömungsquerschnitt. Infolgedessen kann während einer Not- oder Hilfsbremsung im Falle eines Stromausfalls, in welchem eigentlich der zuletzt elektrisch eingestellte Bremsdruck weiterhin wirken würde, der Bremsdruck bis auf den Zuspanndruck der Federspeicherbremse abfallen, wodurch auch bei einem Stromausfall während einer Not- oder Hilfsbremsung der Zustand "Parken" stabil eingenommen wird. Damit werden die eingangs im Hinblick auf den Fall b) beschriebenen Probleme beseitigt.

Die in **Fig.2** gezeigte Entlüftungsstellung des Relaiskolbens 46 ("Parken") ist folglich dadurch gekennzeichnet, dass der Auslasssitz 50 vollständig geöffnet und der Einlasssitz 54 des Doppelsitzventils vollständig geschlossen ist und dadurch an dem Anschluss 40 für den wenigstens einen Federspeicherbremszylinder ein Druck ansteht, welcher einem Zuspanndruck des wenigstens einen Federspeicherbremszylinders entspricht, in welchem dieser vollständig zugespannt ist.

Die in **Fig.4** gezeigte Belüftungsstellung des Relaiskolbens 46 ("Fahren") ist hingegen dadurch gekennzeichnet, dass der Einlasssitz 54 vollständig geöffnet und der Auslasssitz 50 vollständig geschlossen ist und dadurch an dem Anschluss 40 für den wenigstens einen Federspeicherbremszylinder ein Druck ansteht, welcher einem Lösedruck des wenigstens einen Federspeicherbremszylinder entspricht, in welchem dieser vollständig gelöst ist.

Eine in **Fig.3** gezeigte Zwischenstellung des Relaiskolbens 46 ist dadurch gekennzeichnet ist, dass an dem Anschluss 40 für den wenigstens einen Federspeicherbremszylinder ein Druck ansteht, welcher größer als der Zuspanndruck aber kleiner als der Lösedruck ist

Was nun das dritte Drosselelement 66 bzw. die diese bildenden Durchgangsbohrungen betrifft, so sind diese in **Fig.1** bis **Fig.4** derart unterhalb der Durchgangsbohrung angeordnet, welche die zweite Drosselelement 65 bildet, dass eine Strömungsverbindung zwischen der Steuerkammer 42 und der Entlüftung 56 via drittes Drosselelement 66 und Querbohrung 76 wie durch den Pfeil 78 in **Fig.2** veranschaulicht lediglich in der Entlüftungsstellung des Relaiskolbens 46 zustande kommen kann, welche dem Zustand "Parken" entspricht.

Weil zusätzlich der durch das dritte Drosselelement 66 bereitgestellte Strömungsquerschnitt größer ist als der durch das erste Drosselelement 30 bereitgestellte Strömungsquerschnitt kann dann im Zustand "Parken", d.h. in der Entlüftungsstellung des Relaiskolbens 46 ein ungewolltes Lösen der zugespannten Parkbremse bei eventuell auftretenden Undichtigkeiten beispielsweise des Einlassventils (erstes 2/2-Wegemagnetventil) 10 vermieden werden.

Weil aber das dritte Drosselelement 66 in Form der Durchgangsbohrungen 66 lediglich in der Entlüftungsstellung des Relaiskolbens 46 und daher im Zustand "Parken" nicht von dem Ende 72 der Relaiskolbendichtung verdeckt und damit verschlossen ist, im Not- und Hilfsbremsfall und im Zustand "Fahren" jedoch schon, ist eine Strömungsverbindung zwischen der Steuerkammer 42 und der Entlüftung 56 via das dritte Drosselelement 66 ausschließlich im Zustand "Parken" möglich, im Not- und Hilfsbremsfall **(****Fig.3****)** und im Zustand "Fahren" **(****Fig.4****)** jedoch nicht.

Der Relaiskolben 46 mit zweiten Drosselelement 65 und dem dritten Drosselelement 66, jeweils als Durchgangsbohrungen in dessen Mantelwand 68 ausbildet, bildet daher einen Schieber eines Schieberventils, wobei abhängig von der Stellung des Relaiskolbens 46 in Bezug auf das Ende 72 der Relaiskolbendichtung 67 eine Strömungsverbindung zwischen der Steuerkammer 42 und der Entlüftung 56 zustande kommt oder nicht. Dabei öffnet oder verschließt das Ende der an dem Relaisventilgehäuse 44 festgelegten Relaiskolbendichtung 67 abhängig von der Stellung des Relaisventilkolbens 46 das zweite Drosselelement 65 und/oder das dritte Drosselelement 66.

Falls mittels der elektropneumatischen Parkbremssteuereinrichtung 1 eine Ansteuerung eines Anhängersteuerventils vorgesehen ist, so kann diese so ausgeführt werden, dass der an dem Anschluss 40 für den wenigstens einen Federspeicherbremszylinder anstehende Druck gleichzeitig zu einem Anschluss für ein Anhängersteuerventil geleitet wird.

Gemäß einer Ausführungsform ist die elektronische Steuereinrichtung 14 ausgebildet, dass sie auf der Basis eines einen Ist-Druck repräsentierenden Signals und eines einen Wert für einen Soll-Druck repräsentierenden Feststellbremssignals einen Soll-Ist-Abgleich im Rahmen einer Druckregelung und/oder eine Druck-Plausibilitätsprüfung und/oder eine Ermittlung des am Vorratsanschluss 2 anstehenden Vorratsdrucks durchführt.

Falls beispielsweise ein Drucksensor 88 am Arbeitsausgang 28 des Relaisventils 18 angeschlossen und damit auch mit dem Anschluss 40 für den wenigstens einen Federspeicherbremszylinder bzw. mit dem Anschluss 66 für das Anhängersteuerventil verbindbar bzw. verbunden ist, so kann dort der Ist-Druck und daraus der Betriebszustand des wenigstens einen Federspeicherbremszylinders (gelöst, zugespannt bzw. teilweise gelöst oder zugespannt) ermittelt werden. Das Gleiche gilt dann auch für den Betriebszustand der Anhängerbremsen, welcher aus dem Ist-Druck am Anschluss für das Anhängersteuerventil ermittelbar ist. Weiterhin kann dann ein Druckregelkreis realisiert werden, bei welchem die Magnetventileinrichtung 8 in Verbindung mit dem Relaisventil 18 die Stellglieder bilden. Wenn ausschließlich der Drucksensor 88 verwendet wird, erkennt jedoch der Druckregler Druckabweichungen erst, wenn sich bereits eine Abweichung im Arbeitsausgangsdruck des Relaisventils 18 eingestellt hat. Dies kann zu erhöhtem Druckluftverbrauch führen.

Falls ein Drucksensor 89 mit dem Steuereingang 20 des Relaisventils verbunden wird, so kann sehr schnell der von dem ersten und zweiten 2/2-Wegemagnetventil 10, 12 eingeregelte Ist-Druck ermittelt werden, was in einer hohen Dynamik des Druckregelkreises resultiert. Darüber hinaus können auch der Betriebszustand des wenigstens einen Federspeicherbremszylinders (gelöst, zugespannt bzw. teilweise gelöst oder zugespannt) sowie der dort herrschende Ist-Bremsdruck ermittelt werden, allerdings mit einer geringeren Genauigkeit gegenüber der Verwendung des Drucksensors 88, da Ansprechverhalten und Hysterese des Relaisventils 18 als Fehler eingehen. Das Gleiche gilt dann auch für den Betriebszustand der Anhängerbremsen. Besonders vorteilhaft bei Verwendung des Drucksensors 89 ist, dass der Druckregler Druckabweichungen in der Steuerkammer 42 so fein ausregeln kann, dass sie noch nicht zu einer Druckabweichung am Arbeitsausgang des Relaisventils führen.

Falls ein erster Drucksensor 88 mit dem Arbeitsausgang 28 und ein zweiter Drucksensor 89 mit dem Steuereingang des Relaisventils 18 verbunden werden, ermöglicht dies auch eine Fehlererkennung mittels Plausibilitätsprüfung. Beispielsweise müssen die Ist-Druckwerte des ersten und zweiten Drucksensors 88, 89 je nach Betriebszustand unter Berücksichtigung von bestimmten Toleranzen in einer bestimmten Relation zueinander stehen. Dabei ist die Fehlererkennung oder Fehlerüberwachung schnell, vollständig und in mehreren Betriebszuständen durchführbar. Weiterhin ergibt sich eine schnellere Druckregelung mit weniger Druckluftverbrauch als wenn nur ein Drucksensor 88 am Arbeitsausgang 28 des Relaisventils 18 und eine genauere Druckregelung des Arbeitsausgangsdrucks als wenn nur ein Drucksensor 89 am Steuereingang 20 des Relaisventils 18 angeordnet ist.

Gemäß einer Ausführungsform können das Relaisventil 18, die erste Magnetventileinrichtung 8 (erstes und zweites 2/2-Wegemagnetventil 10, 12), das Rückschlagventil 4, das erste Drosselelement 30, die elektronische Steuereinrichtung 14 sowie der Vorratsanschluss 2, der Anschluss 40 für den wenigstens einen Federspeicherbremszylinder und der Feststellbremssignalanschluss 32 in einer Baueinheit ausgebildet sein, die hier ein erweiterbares Grundmodul darstellt. In das Grundmodul bzw. die Baueinheit 92 kann weiterhin zumindest ein Drucksensor 88 und/oder 89 integriert sein. Weiterhin sind natürlich auch die die genannten Komponenten pneumatisch oder elektrisch miteinander verbindenden elektrischen und pneumatischen Leitungen in die Baueinheit integriert. Die Baueinheit oder das Grundmodul kann ein einziges Gehäuse aufweisen oder aus mehreren, lösbar oder nicht lösbar miteinander verbundenen Gehäusen oder Gehäuseteilen bestehen.

Es sei noch erwähnt, dass eine Zusammenfassung der elektropneumatischen Parkbremssteuereinrichtung mit einem anderen elektronisch gesteuerten Fahrzeugsystem zu einer Baueinheit vorteilhaft sein kann, da eine gemeinsame, elektronische Steuereinrichtung vorgesehen werden kann. Insbesondere die Zusammenfassung mit einer Luftaufbereitungsanlage bietet Vorteile, da hier auch die Vorratsleitung zur elektropneumatischen Parkbremssteuereinrichtung entfallen kann.

Die Kombination von Merkmalen unterschiedlicher Ausführungsformen der Erfindung ist möglich und wird hiermit angeregt.

### 16Bezugszeichenliste

- 1: Bremssteuereinrichtung
- 2: Vorratsanschluss
- 4: Rückschlagventil
- 6: Vorratsleitung
- 8: Magnetventileinrichtung
- 10: erstes 2/2-Wegemagnetventil
- 12: zweites 2/2-Wegemagnetventil
- 14: Steuereinrichtung
- 16: Vorratseingang
- 18: Relaisventil
- 20: Steuereingang
- 22: Steuerleitung
- 24: Drucksenke
- 26: Rückkopplungsleitung
- 28: Arbeitsausgang
- 30: erstes Drosselelement
- 32: Feststellbremssignalanschluss
- 34: Signalleitung
- 36: Feststellbremssignalgeber
- 38: Arbeitsleitung
- 40: Anschluss für Federspeicherbremszylinder
- 42: Steuerkammer
- 44: Relaisventilgehäuse
- 46: Relaiskolben
- 48: Ventilkörper
- 50: Auslasssitz
- 52: Manschette
- 54: Einlasssitz
- 56: Entlüftung
- 58: Arbeitskammer
- 60: Vorratskammer
- 62: Manschettenfeder
- 64: Relaiskolbenfeder
- 65: zweites Drosselelement
- 66: drittes Drosselelement
- 67: Relaiskolbendichtung
- 68: Mantelwand
- 70: axiale Bewegungsrichtung
- 72: Ende
- 74: Pfeil
- 76: Querbohrung
- 78: Pfeil
- 88: erster Drucksensor
- 89: zweiter Drucksensor

## Patentansprüche

1. Elektropneumatische Parkbremssteuereinrichtung (1) zur Steuerung einer wenigstens einen Federspeicherbremszylinder beinhaltenden Feststellbremse, mit
a) einem Anschluss (40) für den wenigstens einen Federspeicherbremszylinder,
b) einer mittels einer elektronischen Steuereinrichtung (14) steuerbaren Magnetventileinrichtung (8)
c) einem Relaisventil (18), dessen pneumatischer Steuereingang (20) einerseits mit der Magnetventileinrichtung (8) und andererseits mit dessen Arbeitsausgang (28) und mit dem Anschluss (40) für den wenigstens einen Federspeicherbremszylinder verbunden ist,
d) einem Vorratsanschluss (2) für wenigstens einen Druckluftvorrat, welcher einerseits mit der ersten Magnetventileinrichtung (8) und andererseits mit einem Vorratseingang (16) des Relaisventils (18) verbunden ist,
e) einer Rückkopplungsleitung (26), durch welche der Arbeitsausgang (28) und der pneumatische Steuereingang (20) des Relaisventils (18) miteinander verbunden sind, wobei
f) das Relaisventil (18) eine mit dem pneumatischen Steuereingang (20) verbundene Steuerkammer (42), wenigstens einen vom Druck in der Steuerkammer (42) gesteuerten, ein Doppelsitzventil (50, 54) betätigenden Relaiskolben (46) sowie eine mit dem Arbeitsausgang (28) verbundene Arbeitskammer (58) aufweist, wobei der Relaiskolben (46) innerhalb eines Relaisventilgehäuses (44) geführt ist und die Steuerkammer (42) und die Arbeitskammer (58) begrenzt und das Doppelsitzventil (50, 54) wenigstens einen Einlasssitz (54) und wenigstens einen Auslasssitz (50) umfasst, wobei die Arbeitskammer (58) bei geöffnetem Auslasssitz (50) mit einer Entlüftung (56) und bei geöffnetem Einlasssitz (54) mit dem Vorratseingang (16) verbunden ist, und wobei
g) in der Rückkopplungsleitung (26) wenigstens ein erstes Drosselelement (30) angeordnet ist, derart, dass der Arbeitsausgang und der pneumatische Steuereingang (20) des Relaisventils (18) miteinander stets in gedrosselter Strömungsverbindung stehen, und wobei
h) die Steuerkammer (42) des Relaisventils (18) über wenigstens ein zweites Drosselelement (65) mit der Entlüftung (56) verbunden ist und zwar ausschließlich dann wenn sich der Relaiskolben (46) in einer Entlüftungsstellung oder in einer Zwischenstellung befindet, wobei aber die Verbindung der Steuerkammer (42) mit der Entlüftung (56) über das wenigstens eine zweite Drosselelement (65) unterbrochen ist, wenn sich der Relaiskolben (46) in einer Belüftungsstellung befindet, wobei
h1) in der Entlüftungsstellung des Relaiskolbens (46) innerhalb des Relaisventilgehäuses (44) der Auslasssitz (50) vollständig geöffnet und der Einlasssitz (54) des Doppelsitzventils vollständig geschlossen ist und dadurch an dem Anschluss (40) für den wenigstens einen Federspeicherbremszylinder ein Druck ansteht, welcher einem Zuspanndruck des wenigstens einen Federspeicherbremszylinders entspricht, in welchem dieser vollständig zugespannt ist, und wobei
h2) in der Belüftungsstellung des Relaiskolbens (46) innerhalb des Relaisventilgehäuses (44) der Einlasssitz (54) vollständig geöffnet und der Auslasssitz (50) vollständig geschlossen ist und dadurch an dem Anschluss (40) für den wenigstens einen Federspeicherbremszylinder ein Druck ansteht, welcher einem Lösedruck des wenigstens einen Federspeicherbremszylinder entspricht, in welchem dieser vollständig gelöst ist, und wobei
h3) in der Zwischenstellung des Relaiskolbens (46) innerhalb des Relaisventilgehäuses (44) an derr Anschluss (40) für den wenigstens einen Federspeicherbremszylinder ein Druck ansteht, welcher größer als der Zuspanndruck aber kleiner als der Lösedruck ist,
die elektropneumatische Parkbremssteuereinrichtung (1) **dadurch gekennzeichnet, dass**
i) die Steuerkammer (42) des Relaisventils (18) über wenigstens ein drittes Drosselelement (66) mit der Entlüftung (56) verbunden ist und zwar ausschließlich dann wenn sich der Relaiskolben (46) in der Entlüftungsstellung befindet, wobei aber die Verbindung zwischen der Steuerkammer (42) und der Entlüftung (56) über das wenigstens eine dritte Drosselelement (66) unterbrochen ist, wenn sich der Relaiskolben (46) in der Belüftungsstellung oder in der Zwischenstellung befindet, und wobei
j) der durch das wenigstens eine dritte Drosselelement (66) bereitgestellte Strömungsquerschnitt größer ist als der durch das wenigstens eine erste Drosselelement (30) bereitgestellte Strömungsquerschnitt, und
k) der durch das wenigstens eine zweite Drosselelement (65) bereit gestellte Strömungsquerschnitt kleiner ist als der durch das wenigstens eine erste Drosselelement (30) bereitgestellte Strömungsquerschnitt.

2. Elektropneumatische Parkbremse nach Anspruch 1, **dadurch gekennzeichnet, dass** das wenigstens eine zweite Drosselelement (65) und/oder das wenigstens eine dritte Drosselelement (66) wenigstens eine Durchgangsbohrung in einer Wandung des Relaiskolbens (46) beinhalten und dass ein an dem Relaisventilgehäuse (44) festgelegtes Element (67) vorgesehen ist, welches mit dem wenigstens einen zweiten Drosselelement (65) und/oder mit dem wenigstens einen dritten Drosselelement (66) derart zusammenwirkt, dass abhängig von der Stellung des Relaiskolbens (46) innerhalb des Relaisventilgehäuses (44) die Steuerkammer (42) über das wenigstens eine zweite Drosselelement (65) und/oder über das wenigstens eine dritte Drosselelement (66) mit der Entlüftung (56) verbunden oder eine solche Verbindung gesperrt wird.

3. Elektropneumatische Parkbremse nach Anspruch 2, **dadurch gekennzeichnet, dass** ein Drosselquerschnitt des wenigstens einen zweiten Drosselelements (65) und/oder ein Drosselquerschnitt des wenigstens einen dritten Drosselelements (66) durch die wenigstens eine Durchgangsbohrung gebildet wird.

4. Elektropneumatische Parkbremse nach Anspruch 2 oder 3, **dadurch gekennzeichnet, dass** ein Bereich diesseits eines der Steuerkammer zugewandten Endes (72) des an dem Relaisventilgehäuse (44) festgelegten Elements (67) mit der Steuerkammer (42) in Verbindung steht, wobei
a) wenn die wenigstens eine Durchgangsbohrung das Ende (72) in Richtung Steuerkammer (42) wenigstens teilweise überragt, die Steuerkammer (42) über das wenigstens eine zweite Drosselelement (65) und/oder über das wenigstens eine dritte Drosselelement (66) mit der Entlüftung (56) verbunden wird, und
b) wenn die wenigstens eine Durchgangsbohrung das Ende (72) in Richtung Steuerkammer (42) nicht überragt, eine solche Verbindung gesperrt wird.

5. Elektropneumatische Parkbremse nach einem der Ansprüche 2 bis 4, **dadurch gekennzeichnet, dass** das am Relaisventilgehäuse (44) festgelegte Element (67) wenigstens eine am Relaiskolbengehäuse (44) festgelegte Relaiskolbendichtung beinhaltet, gegen welche eine Mantelwand des Relaiskolbens (46) dichtet, in welcher die wenigstens eine Durchgangsbohrung ausgebildet ist.

6. Elektropneumatische Parkbremse nach einem der vorhergehenden Ansprüche, **dadurch gekennzeichnet, dass** der Relaiskolben (46) durch Federmittel (64) in die Entlüftungsstellung belastet ist.

7. Elektropneumatische Parkbremssteuereinrichtung nach einem der vorhergehenden Ansprüche, **dadurch gekennzeichnet, dass** die elektronische Steuereinrichtung (14) mit einem elektrischen Feststellbremssignalanschluss (32) für einen elektrischen Feststellbremssignalgeber (36) verbunden ist, über welchen Feststellbremssignale in die elektronische Steuereinrichtung (14) einsteuerbar sind.

8. Elektropneumatische Parkbremssteuereinrichtung nach einem der vorhergehenden Ansprüche, **dadurch gekennzeichnet, dass** die Magnetventileinrichtung (8) durch zwei 2/2-Wegemagnetventile (10, 12, 30) mit jeweils einer Sperrstellung und einer Durchlassstellung gebildet wird, wobei ein erstes 2/2-Wegemagnetventil (10) als Einlassventil zwischen den Steuereingang (20) des Relaisventils (18) und den Vorratsanschluss (2) und ein zweites 2/2-Wegemagnetventil (12) zwischen den Steuereingang (20) des Relaisventils (18) und eine Drucksenke (24) geschaltet ist.

9. Elektropneumatische Parkbremssteuereinrichtung nach Anspruch 8, **dadurch gekennzeichnet, dass** das erste 2/2-Wegemagnetventil (10) und das zweite 2/2-Wegemagnetventil (12) jeweils eine stromlose Sperrstellung und eine bestromte Durchlassstellung besitzen.

10. Elektropneumatische Parkbremssteuereinrichtung nach den Ansprüchen 7 und 8 oder 9, **dadurch gekennzeichnet, dass** bei einem Einsteuern oder einem Generieren eines einen Zustand "Fahren" repräsentierenden Feststellbremssignals in die elektronische Steuereinrichtung (14) oder in der elektronischen Steuereinrichtung (14) das zweite 2/2-Wegemagnetventil (12) von der elektronischen Steuereinrichtung (14) in Sperrstellung und zunächst das erste 2/2-Wegemagnetventil (10) in Durchlassstellung und dann in Sperrstellung gesteuert wird.

11. Elektropneumatische Parkbremssteuereinrichtung nach den Ansprüchen 7 und 8 oder 9, **dadurch gekennzeichnet, dass** bei einem Einsteuern oder einem Generieren eines einen Zustand "Feststellbremse mit einem bestimmtem Bremsdruckwert betätigen" repräsentierenden Feststellbremssignals in die elektronische Steuereinrichtung (14) oder in der elektronischen Steuereinrichtung (14) diese das erste 2/2-Wegemagnetventil (10) und/oder das zweite 2/2-Wegemagnetventil (12) abhängig von den dem jeweiligen Bremsdruckwert in Sperrstellung oder in Durchlassstellung steuert.

12. Elektropneumatische Parkbremssteuereinrichtung nach Anspruch 11, **dadurch gekennzeichnet, dass** die elektronische Steuereinrichtung (14) das erste 2/2-Wegemagnetventil (10) und/oder das zweite 2/2-Wegemagnetventil (12) wechselweise oder gepulst in Sperrstellung und in Durchlassstellung steuert.

13. Elektropneumatische Parkbremssteuereinrichtung nach den Ansprüchen 7 und 8 oder 9, **dadurch gekennzeichnet, dass** bei einem Einsteuern oder Generieren eines einen Zustand "Parken" oder "Feststellbremsen" repräsentierenden Feststellbremssignals in die elektronische Steuereinrichtung (14) oder in der Steuereinrichtung (14) diese das erste 2/2-Wegemagnetventil (10) in Sperrstellung und zunächst das zweite 2/2-Wegemagnetventil (12) in Durchlassstellung und dann das zweite 2/2-Wegemagnetventil (12) in Sperrstellung steuert.

14. Elektropneumatische Parkbremssteuereinrichtung nach einem der vorhergehenden Ansprüche, **dadurch gekennzeichnet, dass** wenigstens ein Drucksensor (88) mit dem Anschluss (40) für den wenigstens einen Federspeicherbremszylinder und/oder wenigstens ein Drucksensor (89) mit dem Steuereingang (20) des Relaisventils (18), welcher ein einen Ist-Druck repräsentierendes Signal in die elektronische Steuereinrichtung (14) einsteuert.

15. Elektropneumatische Parkbremssteuereinrichtung nach Anspruch 14, **dadurch gekennzeichnet, dass** die elektronische Steuereinrichtung (14) ausgebildet ist, dass sie auf der Basis des den Ist-Druck repräsentierenden Signals und eines einen Wert für einen Soll-Druck repräsentierenden Signals einen Soll-Ist-Abgleich im Rahmen einer Druckregelung durchführt und/oder eine Druck-Plausibilitätsprüfung und/oder eine Ermittlung des am Vorratsanschluss (2) anstehenden Vorratsdrucks durchführt.

16. Elektropneumatische Parkbremssteuereinrichtung nach einem der vorhergehenden Ansprüche, **dadurch gekennzeichnet, dass** der Vorratsanschluss (2) über ein Rückschlagventil (4) abgesichert ist.

17. Bremsanlage eines Fahrzeugs beinhaltend eine elektropneumatische Parkbremssteuereinrichtung (1) nach wenigstens einem der vorhergehenden Ansprüche.

18. Bremsanlage eines Fahrzeugs nach Anspruch 17, **dadurch gekennzeichnet, dass** sie eine elektropneumatische Parkbremseinrichtung ist.

## Claims

1. An electropneumatic parking-brake control device (1) for controlling a parking brake comprising at least one spring accumulator brake cylinder and having
a) a port (40) for the at least one spring accumulator brake cylinder;
b) a solenoid valve device (8) that can be controlled by means of an electronic control device (14);
c) a relay valve (18) having a pneumatic control input (20) that is connected at one end to the solenoid valve device (8), and at the other end to its working outlet (28) and to the port (40) for the at least one spring accumulator brake cylinder;
d) a supply port (2) for at least one compressed-air supply that is connected at one end to the first solenoid valve device (8) and at the other end to a supply inlet (16) of the relay valve (18); and
e) a feedback line (26) by which the working outlet (28) and the pneumatic control input (20) of the relay valve (18) are connected to one another,
f) the relay valve (18) having a control chamber (42) that is connected to the pneumatic control input (20); at least one relay piston (46) that actuates a double-seat valve (50, 54) and is controlled by the pressure in the control chamber (42); and a working chamber (58) that is connected to the working outlet (28), the relay piston (46) being guided inside a relay valve housing (44) and delimiting the control chamber (42) and the working chamber (58), and the double-seat valve (50, 54) comprising at least one inlet seat (54) and at least one outlet seat (50), the working chamber (58) being connected to a venting means (56) when the outlet seat (50) is open and being connected to the supply inlet (16) when the inlet valve (54) is open, and
g) at least one first throttle element (30) being arranged in the feedback line (26) in such a manner that the working outlet and the pneumatic control input (20) of the relay valve (18) are always in a throttled flow connection with one another, and
h) the control chamber (42) of the relay valve (18) being connected to the venting means (56) via at least one second throttle element (65), though exclusively when the relay piston (46) is in a venting position or an intermediate position, the connection between the control chamber (42) and the venting means (56), however, being interrupted by the at least one second throttle element (65) if the relay piston (46) is in an aeration position,
h1) when the relay piston (46) is in the venting position inside the relay valve housing (44), the outlet seat (50) being fully open, the inlet seat (54) of the double-seat valve being fully closed and a pressure corresponding to an application pressure of the at least one spring accumulator brake cylinder at which the spring accumulator brake cylinder is fully applied thus prevailing at the port (40) for the at least one spring accumulator brake cylinder, and
h2) when the replay piston (46) is in the aeration position inside the relay valve housing (44), the inlet seat (54) being fully open, the outlet seat (50) being fully closed, and a pressure corresponding to a release pressure of the at least one spring accumulator brake cylinder at which the spring accumulator brake cylinder is fully released thus prevailing at the port (40) for the at least one spring accumulator brake cylinder, and
h3) when the replay piston (46) is in the intermediate position inside the relay valve housing (44), a pressure prevailing at the port (40) for the at least one spring accumulator brake cylinder being greater than the application pressure but less than the release pressure,
the electropneumatic parking-brake control device (1) being **characterised in that**
i) the control chamber (42) of the relay valve (18) is connected via at least one third throttle element (66) to the venting means (56), though exclusively when the relay piston (46) is in the venting position, the connection between the control chamber (42) and the venting means (56), however, being interrupted by the at least one third throttle element (66) if the relay piston (46) is in the aeration position or the intermediate position, and
j) the flow cross-section provided by the at least one third throttle element (66) is greater than the flow cross-section provided by the at least one first throttle element (30), and
k) the flow cross-section provided by the at least one second throttle element (65) is less than the flow cross-section provided by the at least one first throttle element (30).

2. An electropneumatic parking brake according to claim 1, **characterised in that** the at least one second throttle element (65) and/or the at least one third throttle element (66) have at least one through-hole in a wall of the relay piston (46), and **in that** there is provided an element (67) that is secured to the relay valve housing (44) and that cooperates with the at least one second throttle element (65) and/or with the at least one third throttle element (66) in such a manner that, depending on the position of the relay valve (46) inside the relay valve housing (44), the control chamber (42) is connected to the venting means (56) via the at least one second throttle element (65) and/or via the at least one third throttle element (66), or such a connection is blocked.

3. An electropneumatic parking brake according to claim 2, **characterised in that** a throttle cross-section of the at least one second throttle element (65) and/or a throttle cross-section of the at least one third throttle element (66) takes the form of the at least one through-hole.

4. An electropneumatic parking brake according to claim 2 or 3, **characterised in that** a region on this side of an end (72) facing the control chamber of the element (67) that is secured to the relay valve housing (44) is connected to the control chamber (42),
a) if the at least one through-hole projects at least partially beyond the end (72) in the direction of the control chamber (42), the control chamber (42) being connected to the venting means (56) via the at least one second throttle element (65) and/or the at least one third throttle element (66), and
b) if the at least one through-hole does not project beyond the end (72) in the direction of the control chamber (42), such a connection being blocked.

5. An electropneumatic parking brake according to any one of claims 2 to 4, **characterised in that** the element (67) secured to the relay valve housing (44) comprises at least one relay piston seal that is secured to the relay piston housing (44) and against which a lateral wall of the relay piston (46), in which the at least one through-hole is formed, forms a seal.

6. An electropneumatic parking brake according to any one of the preceding claims, **characterised in that** the relay piston (46) is loaded by spring means (64) into the venting position.

7. An electropneumatic parking-brake control device according to any one of the preceding claims, **characterised in that** the electronic control device (14) is connected to an electric parking-brake signal port (32) for an electric parking-brake signal generator (36) via which parking-brake signals can be sent to the electronic control device (14).

8. An electropneumatic parking-brake control device according to any one of the preceding claims, **characterised in that** the solenoid valve device (8) is formed of two 2/2-way solenoid valves (10, 12, 30), each having a closed position and an open position, a first 2/2-way solenoid valve (10) being connected as an inlet valve between the control input (20) of the relay valve (18) and the supply port (2), and a second 2/2-way solenoid valve (12) being connected between the control input (20) of the relay valve (18) and a pressure sink (24).

9. An electropneumatic parking-brake control device according to claim 8, **characterised in that** the first 2/2-way solenoid valve (10) and the second 2/2-way solenoid valve (12) each have a de-energised closed position and an energised open position.

10. An electropneumatic parking-brake control device according to claims 7 and 8 or 9, **characterised in that** when a parking-brake signal representing a "drive" state is input into the electronic control device (14) or generated in the control device (14), the second 2/2-way solenoid valve (12) is switched to the closed position by the electronic control device (14), and the first 2/2-way solenoid valve (10) is switched initially to the open position and then to the closed position.

11. An electropneumatic parking-brake control device according to claims 7 and 8 or 9, **characterised in that** when a parking-brake signal representing an "actuate parking brake with a specific brake pressure value" state is input into the electronic control device (14) or generated in the control device (14), this control device (14) switches the first 2/2-way solenoid valve (10) and/or the second 2/2-way solenoid valve (12) to the closed position or the open position depending on the brake pressure value.

12. An electropneumatic parking-brake control device according to claim 11, **characterised in that** the electronic control device (14) switches the first 2/2-way solenoid valve (10) and/or the second 2/2-way solenoid valve (12) either alternately or in a pulsed fashion to the closed position and the open position.

13. An electropneumatic parking-brake control device according to claims 7 and 8 or 9, **characterised in that** when a parking-brake signal representing a "park" or "emergency braking" state is input into the electronic control device (14) or generated in the control device (14), this control device (14) switches the first 2/2-way solenoid valve (10) to the closed position and switches the second 2/2-way solenoid valve (12) initially to the open position and then to the closed position.

14. An electropneumatic parking-brake control device according to any one of the preceding claims, **characterised in that** at least one pressure sensor (88) is connected to the port (40) for the at least one spring accumulator brake cylinder, and/or at least one pressure sensor (89) is connected to the control input (20) of the relay valve (18), this input sending a signal representing an actual pressure in the electronic control device (14).

15. An electropneumatic parking-brake control device according to claim 14, **characterised in that** the electronic control device (14) is designed in such a manner that in the course of a pressure regulation process it carries out a target/actual value comparison on the basis of the signal representing the actual pressure and a signal representing a value for a target pressure, and/or carries out a pressure plausibility check, and/or determines the supply pressure prevailing at the supply port (2).

16. An electropneumatic parking-brake control device according to any one of the preceding claims, **characterised in that** the supply port (2) is protected by a non-return valve (4).

17. A brake system of a vehicle comprising an electropneumatic parking-brake control device (1) according to at least one of the preceding claims.

18. A brake system of a vehicle according to claim 17, **characterised in that** it is an electropneumatic parking brake device.

## Revendications

1. Dispositif (1) électropneumatique de commande de frein de stationnement pour la commande d'un frein de stationnement comportant au moins un cylindre de frein à ressort accumulateur, comprenant
a) un raccord (40) pour le au moins un cylindre de frein à ressort accumulateur,
b) un dispositif (8) d'électrovanne pouvant être commandé au moyen d'un dispositif (14) électronique de commande,
c) une vanne (18) relais dont l'entrée (20) pneumatique de commande communique d'une part avec le dispositif (8) d'électrovanne et d'autre part avec sa sortie (28) de travail et avec le raccord (40) pour le au moins un cylindre de frein à ressort accumulateur,
d) un raccord (2) de réservoir pour au moins un réservoir d'air comprimé, qui communique d'une part avec le premier dispositif (8) d'électrovanne et d'autre part avec une entrée (16) de réservoir de la vanne (18) relais,
e) un conduit (26) de réaction, par lequel la sortie (28) de travail et l'entrée (20) pneumatique de commande de la vanne (18) relais communiquent entre elles, dans lequel
f) la vanne (18) relais a une chambre (42) de commande communiquant avec l'entrée (20) pneumatique de commande, au moins un piston (46) relais commandé par la pression dans la chambre (42) de commande et actionnant une vanne (50, 54) à double siège, ainsi qu'une chambre (58) de travail communiquant avec la sortie (28) de travail, dans lequel le piston (46) relais est guidé dans un boîtier (44) de vanne relais et délimite la chambre (42) de commande et la chambre (58) de travail et la vanne (50, 54) à double siège comprend au moins un siège (54) d'entrée et au moins un siège (50) de sortie, dans lequel la chambre (58) de travail communique, lorsque le siège (50) de sortie est ouvert, avec une purge (56) et, lorsque le siège (54) d'entrée est ouvert, avec l'entrée (16) de réservoir, et dans lequel
g) dans le conduit (26) de réaction, au moins un premier élément (30) d'étranglement est monté de manière à ce que la sortie de travail et l'entrée (20) pneumatique de commande de la vanne (18) relais soient toujours en liaison d'écoulement étranglée entre elles, et dans lequel
h) la chambre (42) de commande de la vanne (18) relais communique avec la purge (56) par au moins un deuxième élément (65) d'étranglement et cela exclusivement lorsque le piston (46) relais se trouve dans une position de purge ou dans une position intermédiaire, mais dans lequel la communication de la chambre (42) de commande avec la purge (56) est interrompue par le au moins un deuxième élément (65) d'étranglement si le piston (46) relais se trouve dans une position d'alimentation en air, dans lequel
h1) dans la position de purge du piston (46) relais, à l'intérieur du boîtier (44) de la vanne relais, le siège (50) de sortie est ouvert complètement et le siège (54) d'entrée de la vanne à double siège est fermé complètement et ainsi s'applique au raccord (40) pour le au moins un cylindre de frein à ressort accumulateur une pression, qui correspond à une pression de serrage du au moins un cylindre de frein à ressort accumulateur, dans lequel celui-ci est serré complètement, et dans lequel
h2) dans la position d'alimentation en air du piston (46) relais, dans le boîtier (44) de la vanne relais, le siège (54) d'entrée est ouvert complètement et le siège (50) de sortie est fermé complètement et ainsi s'applique au raccord (40) pour le au moins un cylindre de frein à ressort accumulateur une pression, qui correspond à une pression de desserrage du au moins un cylindre de frein à ressort accumulateur, dans lequel celui-ci est desserré complètement, et dans lequel
h3) dans la position intermédiaire du piston (46) relais dans le boîtier (44) de la vanne relais, s'applique au raccord (40) pour le au moins un cylindre de frein à ressort accumulateur une pression, qui est plus grande que la pression de serrage, mais plus petite que la pression de desserrage,
le dispositif (1) électropneumatique de commande de frein de stationnement **étant caractérisé en ce que**
i) la chambre (42) de commande de la vanne (18) relais communique avec la purge (56) par au moins un troisième élément (66) d'étranglement et cela exclusivement lorsque le piston (46) relais se trouve dans la position de purge, mais dans lequel la communication entre la chambre (42) de commande et la purge (56) est interrompue par le au moins un troisième élément (66) d'étranglement si le piston (46) relais se trouve dans la position d'alimentation en air ou dans la position intermédiaire, et dans lequel
j) la section transversale d'écoulement donnée par le au moins un troisième élément (66) d'étranglement est plus grande que la section transversale d'écoulement donnée par le au moins un premier élément (30) d'étranglement,
k) la section transversale d'écoulement déjà donnée par le au moins un deuxième élément (65) d'étranglement est plus petite que la section transversale d'écoulement donnée par le au moins un premier élément (30) d'étranglement.

2. Frein électropneumatique de stationnement suivant la revendication 1, **caractérisé en ce que** le au moins un deuxième élément (65) d'étranglement et/ou le au moins un troisième élément (66) d'étranglement comportent au moins un trou de passage dans une paroi du piston (46) relais et **en ce qu'**il est prévu un élément (67) qui est fixé sur le boîtier (44) de la vanne relais et qui coopère avec le au moins un deuxième élément (65) d'étranglement et/ou avec le au moins un troisième élément (66) d'étranglement de manière à ce que, en fonction de la position du piston (46) relais dans le boîtier (44) de la vanne relais, la chambre (42) de commande communique avec la purge (56) par le au moins un deuxième élément (65) d'étranglement et/ou par le au moins un troisième élément (66) d'étranglement ou une telle communication est bloquée.

3. Frein électropneumatique de stationnement suivant la revendication 2, **caractérisé en ce qu'**une section transversale d'étranglement due au moins à un deuxième élément (65) d'étranglement et/ou une section transversale d'étranglement du au moins un troisième élément (66) d'étranglement est formée par le au moins un trou de passage.

4. Frein électropneumatique de stationnement suivant la revendication 2 ou 3, **caractérisé en ce qu'**une partie en-deçà d'une extrémité (42) tournée vers la chambre de commande de l'élément (67) fixé au boîtier (44) de la vanne relais, communique avec la chambre (42) de commande, dans lequel
a) si le au moins un trou de passage dépasse au moins en partie de l'extrémité (72) en direction de la chambre (42) de commande, la chambre (42) de commande communique avec la purge (56) par le au moins un deuxième élément (65) d'étranglement et/ou par le au moins un troisième élément (66) d'étranglement,
b) si le au moins un trou de passage ne dépasse pas de l'extrémité (72) en direction de la chambre (42) de commande, une communication de ce genre est bloquée.

5. Frein électropneumatique de stationnement suivant l'une des revendications 2 à 4, **caractérisé en ce que** l'élément (67) fixé au boîtier (44) de la vanne relais comporte au moins une étanchéité de piston relais fixée au boîtier (44) du piston relais, contre laquelle est étanche une paroi latérale du piston (46) relais, dans laquelle est constituée le au moins un trou de passage.

6. Frein électropneumatique de stationnement suivant l'une des revendications précédentes, **caractérisé en ce que** le piston (46) relais est soumis dans la position de purge à des moyens (64) à ressort.

7. Frein électropneumatique de stationnement suivant l'une des revendications précédentes, **caractérisé en ce que** le dispositif (14) électronique de commande est relié à une borne (32) électrique de signal de frein de stationnement pour un navigateur (36) électrique de signal de frein de stationnement, par lequel des signaux de frein de stationnement peuvent être entrés dans le dispositif (14) électronique de commande.

8. Frein électropneumatique de stationnement suivant l'une des revendications précédentes, **caractérisé en ce que** le dispositif (8) d'électrovanne est formé de deux électrovannes (10, 12, 30) à 2/2 voies ayant chacune une position de blocage et une position de passage, dans lequel une première électrovanne (10) à 2/2 voies est montée comme vanne d'entrée entre l'entrée (20) de commande de la vanne (18) relais et le raccord (2) de réservoir et une deuxième électrovanne (12) à 2/2 voies entre l'entrée (20) de commande de la vanne (18) relais et un puits (24) de pression.

9. Frein électropneumatique de stationnement suivant la revendication 8, **caractérisé en ce que** la première électrovanne (10) à 2/2 voies et la deuxième électrovanne (12) à 2/2 voies possèdent chacune une position de blocage sans courant et une position de passage alimentée en courant.

10. Frein électropneumatique de stationnement suivant les revendications 7 et 8 ou 9, **caractérisé en ce que,** à l'entrée ou à la production d'un signal de frein de stationnement représentant un état « marche » dans le dispositif (14) électronique de commande, la deuxième électrovanne (12) à 2/2 voies est mise par le dispositif (14) électronique de commande en position de blocage, et d'abord la première électrovanne (10) à 2/2 voies est mise en position de passage et ensuite en position de blocage.

11. Frein électropneumatique de stationnement suivant les revendications 7 et 8 ou 9, **caractérisé en ce que,** à l'entrée ou à la production d'un signal de frein de stationnement, représentant un état « frein d'arrêt actionné par une valeur de pression de frein déterminée » dans le dispositif (14) électronique de commande, celui-ci met la première électrovanne (10) à 2/2 voies et/ou la deuxième électrovanne (12) à 2/2 voies en position de blocage en position de passage en fonction de la valeur de la pression de frein respective.

12. Frein électropneumatique de stationnement suivant la revendication 11, **caractérisé en ce que** le dispositif (14) électronique de commande met la première électrovanne (10) à 2/2 voies ou la deuxième électrovanne (12) à 2/2 voies en alternance ou de manière puisée en position de blocage et en position de passage.

13. Frein électropneumatique de stationnement suivant les revendications 7 et 8 ou 9, **caractérisé en ce qu'à** l'entrée ou à la production d'un signal de frein de stationnement représentant un état « stationnement » ou « frein d'arrêt » dans le dispositif (14) électronique de commande, celui-ci met la première électrovanne (10) à 2/2 voies en position de blocage et d'abord la deuxième électrovanne (12) à 2/2 voies en position de passage et ensuite la deuxième électrovanne (12) à 2/2 voies en position de blocage.

14. Frein électropneumatique de stationnement suivant l'une des revendications précédentes, **caractérisé par** au moins un capteur (88) de pression avec un raccord (40) pour le au moins un cylindre de frein à ressort accumulateur et/ou au moins un capteur (89) de pression avec l'entrée (20) de commande de la vanne (18) relais, qui entre un signal représentant une pression réelle dans le dispositif (14) électronique de commande.

15. Frein électropneumatique de stationnement suivant la revendication 14, **caractérisé en ce que** le dispositif (14) électronique de commande est constitué de manière à effectuer, sur la base du signal représentant la pression réelle et d'un signal représentant une valeur d'une pression de consigne, une égalisation consigne-réelle dans le cadre d'une régulation de la pression et/ou effectue un contrôle de vraisemblance de la pression et/ou une détermination de la pression du réservoir s'appliquant au raccord (2) de réservoir.

16. Frein électropneumatique de stationnement suivant l'une des revendications précédentes, **caractérisé en ce que** le raccord (2) de réservoir est sécurisé par un clapet (4) anti-retour.

17. Système de frein d'un véhicule , comportant un dispositif (1) électropneumatique de commande de frein de stationnement, suivant au moins l'une des revendications précédentes.

18. Système de freinage d'un véhicule suivant la revendication 17, **caractérisé en ce que** c'est un dispositif électropneumatique de frein de stationnement.
